(19)

Europäisches
Patentamt
European
Patent Office
Office européen
des brevets

(11) **EP 4 741 337 A1**

(12) **EUROPEAN PATENT APPLICATION**
published in accordance with Art. 153(4) EPC

(43) Date of publication:
**13.05.2026 Bulletin 2026/20**

(21) Application number: **24843198.3**

(22) Date of filing: **19.07.2024**

(51) International Patent Classification (IPC):
**C01B 3/04** (2026.01)        **B01J 23/42** (2006.01)
**C01B 3/06** (2026.01)

(52) Cooperative Patent Classification (CPC):
**B01J 23/42; C01B 3/04; C01B 3/06;** Y02E 60/36

(86) International application number:
**PCT/JP2024/025912**

(87) International publication number:
**WO 2025/018410 (23.01.2025 Gazette 2025/04)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:    **20.07.2023   JP 2023118300**
**12.01.2024   JP 2024003087**

(71) Applicant: **Mitsubishi Kakoki Kaisha, Ltd
Kawasaki-shi, Kanagawa 210-8560 (JP)**

(72) Inventors:
• **MORI, Yoh
  Kawasaki-shi, Kanagawa 210-8560 (JP)**
• **OKEYA, Hisashi
  Kawasaki-shi, Kanagawa 210-8560 (JP)**
• **INOMATA, Makoto
  Kawasaki-shi, Kanagawa 210-8560 (JP)**
• **YUMURA, Takuo
  Kawasaki-shi, Kanagawa 210-8560 (JP)**
• **WANG, Yufei
  Kawasaki-shi, Kanagawa 210-8560 (JP)**

(74) Representative: **Daub, Thomas
Daub PartG mbB
Bahnhofstraße 5
88662 Überlingen (DE)**

(54) **AMMONIA-HYDROGEN MIXED FUEL PRODUCTION APPARATUS, FUEL SUPPLY SYSTEM, AND HYDROGEN PRODUCTION METHOD**

(57)     [Problem] Provided are an ammonia-hydrogen mixed fuel production apparatus and a fuel supply system, which are capable of stably acquiring hydrogen from ammonia even when a required ratio of a fuel is changed. [Solution] An ammonia-hydrogen mixed fuel production apparatus 1010A includes an oxygen separator 13 that separates oxygen ($O_2$) 12 from air 11 at a desired con-

centration, a reforming reactor 15 that converts ammonia ($NH_3$) supplied from a raw material supply portion 14 into hydrogen ($H_2$) by using the oxygen of the desired concentration from the oxygen separator 13, and a gas component analyzer 17 that measures a concentration of one or both of the hydrogen and the ammonia in a reformed gas 16 from the reforming reactor 15.

FIG. 1

EP 4 741 337 A1

**Description**

TECHNICAL FIELD

The present invention relates to an ammonia-hydrogen mixed fuel production apparatus, a fuel supply system, and a hydrogen production method.

BACKGROUND ART

In recent years, techniques for using ammonia to achieve carbon neutral have attracted attention. As an example of producing hydrogen ($H_2$) from ammonia ($NH_3$), there is an ammonia decomposition method (see Patent Literature 1).

CITATION LIST

NON-PATENT LITERATURE

Patent Literature 1: JP2022-144912A
Patent Literature 2: JP2023-83706A

SUMMARY OF INVENTION

TECHNICAL PROBLEM

However, in the proposal of the decomposition method of acquiring hydrogen from ammonia, which is disclosed in Patent Literature 1, it is necessary to use an ammonia decomposition device that heats from the outside of a reactor to supply heat. This ammonia decomposition device performing external heating uses a method of mixing air (oxygen) with a mixed gas of ammonia ($NH_3$) and $H_2/N_2$ as an off-gas from a pressure swing adsorption (PSA) device and then combusting the mixed gas by using, for example, a burner or the like, but the ammonia as a main fuel has a lower combustion speed than a fuel such as methane, and has problems not only in reliable ignition and combustion stabilization but also in generation inhibition of a nitrogen oxide.

However, a composition (a hydrogen/ammonia composition ratio) and a flow rate of the fuel may vary depending on requirements of a boiler, a gas engine, an industrial furnace, and the like on a downstream side. When such turndown is large (for example, a turndown ratio varies from 100% to 20%, and a hydrogen ratio varies from 100% to 20%), it is difficult to stably combust the fuel by the external heating or quickly cope with the variation at the time of converting the ammonia into the hydrogen in the ammonia decomposition device.

Further, in an autothermal reformer (ATR) device that oxidatively decomposes ammonia, the ammonia is oxidized by oxygen in an oxidative decomposition catalyst portion. Due to self-heating by oxidation, the ammonia is subjected to oxidative decomposition and a decomposition reaction in the catalyst portion of the ATR device, and is reformed into hydrogen. .

According to the technique described in Patent Literature 2 in the related art, ammonia as a raw material for ammonia reforming is oxidized on a catalyst. Therefore, it is necessary to heat the catalyst or a raw material gas in advance because the catalyst is not oxidized unless the catalyst is heated to 200°C or higher.

In addition, in a small-to-medium-scale system capable of generating hydrogen of 100 $m^3$ to 2,000 $m^3$ per hour, which is an object of the present invention, it is necessary to quickly cope with a load variation and a daily start and stop (DSS) operation in order to produce a fuel to be used in a heating furnace, a gas engine, or a boiler in which the load variation is large and the DSS operation is frequently performed. Further, since the system has a small and medium scale, the size of a reactor is small, when heat dissipation from the reactor increases, it is necessary to increase an oxidation amount of the ammonia in order to compensate for heat required for the decomposition reaction of the ammonia, and as a result, the yield of the hydrogen and thermal efficiency decrease. In order to package the device, it is necessary to reduce the number of units and make the reactor compact.

Further, when a boiler, an industrial furnace, or the like is used as a supply destination of the hydrogen, since the boiler, the industrial furnace, or the like frequently repeats turndown, shutdown, and startup, a self-supporting type boiler, industrial furnace, or the like that can easily and quickly cope with the above is desirable. In the case of a unit in the related art, since it is necessary to perform an operation of heating to 200°C or higher at which an oxidative decomposition reaction can be started at the time of startup, a heating facility needs to be separately provided, the facility is complicated, and it is difficult to provide quick countermeasures.

In view of the above problems, the present invention provides an ammonia-hydrogen mixed fuel production apparatus, a fuel supply system, and a hydrogen production method, which are capable of stably and quickly acquiring hydrogen from ammonia even when a required composition ratio or an amount of a fuel is changed.

SOLUTION TO PROBLEM

(1) An ammonia-hydrogen mixed fuel production apparatus according to one aspect of the present invention includes:

an oxygen supply portion configured to supply oxygen of a desired concentration;
a reforming reactor configured to convert ammonia into hydrogen by using the oxygen of the desired concentration supplied from the oxygen supply portion, and use an acquired mixture as a reformed gas; and
a gas component analyzer configured to measure a concentration of one or both of the hydrogen and the ammonia in the reformed gas from the reforming reactor.

(2) In the ammonia-hydrogen mixed fuel production apparatus according to another aspect of the present invention, the oxygen supply portion is an oxygen separator that separates oxygen from air at a desired concentration.
(3) In the ammonia-hydrogen mixed fuel production apparatus according to another aspect of the present invention, the oxygen supply portion is an air dryer that removes moisture in supplied air.
(4) In the ammonia-hydrogen mixed fuel production apparatus according to another aspect of the present invention, the oxygen supply portion adds 3 vol% to 20 vol% of oxygen with respect to a supply amount of the ammonia.
(5) In the ammonia-hydrogen mixed fuel production apparatus according to another aspect of the present invention, a supply amount of the oxygen from the oxygen supply portion is controlled based on the concentration of one or both of the hydrogen and the ammonia from the gas component analyzer.
(6) In the ammonia-hydrogen mixed fuel production apparatus according to another aspect of the present invention, a bypass line for supplying the ammonia from the raw material supply portion is provided between the reforming reactor and a measurement point of the gas component analyzer on a downstream side of the reforming reactor.
(7) The ammonia-hydrogen mixed fuel production apparatus according to another aspect of the present invention further includes:

a bypass line configured to supply the ammonia from a raw material supply portion between the reforming reactor and a measurement point of the gas component analyzer on a downstream side of the reforming reactor; and
a storage tank provided between an ammonia introduction position of the bypass line and the reforming reactor, in which
a gas composition of the reformed gas and the ammonia is adjusted according to a composition ratio of the ammonia and the hydrogen in the gas component analyzer and a required fuel composition ratio.

(8) In the ammonia-hydrogen mixed fuel production apparatus according to another aspect of the present invention, the reforming reactor includes:

a housing that includes an introduction port through which the ammonia and a combustible gas other than the ammonia are introduced, and an outlet port through which a produced gas flows out,
a first catalyst portion disposed inside the housing and including a first catalyst that generates heat by combusting the combustible gas introduced from the introduction port, and
a second catalyst portion disposed between the first catalyst portion and the outlet port and including a second catalyst that is heated by the heat generated in the first catalyst portion and generates hydrogen from ammonia.

(9) In the ammonia-hydrogen mixed fuel production apparatus according to another aspect of the present invention, the first catalyst portion is disposed between the introduction port and the second catalyst portion.
(10) In the ammonia-hydrogen mixed fuel production apparatus according to another aspect of the present invention, the reactor includes, between the first catalyst portion and the second catalyst portion, a dispersion portion that disperses a gas flowing out from the first catalyst portion toward the second catalyst portion.
(11) The ammonia-hydrogen mixed fuel production apparatus according to another aspect of the present invention further includes:

an outflow channel through which the hydrogen flows out from the outlet port;
a tank provided in the outflow channel and configured to store the hydrogen flowing out; and

a return channel branched from a branch portion of the outflow channel and configured to return the hydrogen to the introduction port.

(12) A fuel supply system according to another aspect of the present invention uses an ammonia-hydrogen mixed fuel production apparatus according to (1) or (2) above to supply an ammonia-reformed fuel to a fuel demand portion side.

(13) A hydrogen production method according to another aspect of the present invention includes:

an introduction step of introducing an introduction gas containing ammonia and a combustible gas other than the ammonia into a reactor;

a combustion step of selectively combusting the combustible gas in the introduced introduction gas with a first catalyst;

a second catalyst heating step of heating a second catalyst, which generates hydrogen from the ammonia, by heat generated in the combustion step; and

a reforming step of stopping the introduction of the combustible gas after a temperature of the second catalyst reaches a predetermined temperature, and generating the hydrogen from the ammonia by using the second catalyst.

ADVANTAGEOUS EFFECTS OF INVENTION

According to the present invention, it is possible to stably acquire hydrogen from ammonia even when a required ratio of a fuel is changed.

According to the present disclosure, it is possible to provide a reactor that has high thermal efficiency and is capable of quickly coping with a load variation on a demand portion side and startup and shutdown, and a hydrogen production method.

BRIEF DESCRIPTION OF DRAWINGS

[FIG. 1] FIG. 1 is a schematic view of an ammonia-hydrogen mixed fuel production apparatus according to a first embodiment of the present invention.

[FIG. 2] FIG. 2 is a schematic view of an ammonia-hydrogen mixed fuel production apparatus according to a second embodiment of the present invention.

[FIG. 3] FIG. 3 is a schematic view of an ammonia-hydrogen mixed fuel production apparatus according to a third embodiment of the present invention.

[FIG. 4] FIG. 4 is a schematic view of an ammonia-hydrogen mixed fuel production apparatus according to a fourth embodiment of the present invention.

[FIG. 5A] FIG. 5A is a cross-sectional view showing an internal structure of a reactor according to a fifth embodiment.

[FIG. 5B] FIG. 5B is a structural diagram of a dispersion portion provided inside the reactor according to the fifth embodiment.

[FIG. 5C] FIG. 5C is a structural diagram of another dispersion portion provided inside the reactor according to the fifth embodiment.

[FIG. 5D] FIG. 5D is a cross-sectional view showing another internal structure of the reactor according to the fifth embodiment.

[FIG. 6] FIG. 6 is a perspective view of a first catalyst portion, and illustrates the size of the first catalyst portion.

[FIG. 7] FIG. 7 is a perspective view of a second catalyst portion, and illustrates the size of the second catalyst portion.

[FIG. 8] FIG. 8 is a diagram illustrating a temperature gradient between the second catalyst portion and a housing.

[FIG. 9] FIG. 9 is a diagram showing a structure for starting the reactor by using at least a part of hydrogen generated in the second catalyst portion.

[FIG. 10] FIG. 10 is a graph showing a temperature distribution inside the reactor when a combustible gas is combusted in the catalyst portion under specific reaction conditions according to the fifth embodiment.

[FIG. 11] FIG. 11 is a graph showing a temperature distribution inside the reactor when ammonia reforming is performed in the reactor without adding the combustible gas.

[FIG. 12] FIG. 12 is a flowchart showing a hydrogen production method.

[FIG. 13] FIG. 13 is a cross-sectional view showing an internal structure of a reactor according to a sixth embodiment.

[FIG. 14] FIG. 14 is a cross-sectional view showing an internal structure of a reactor according to a seventh embodiment.

[FIG. 15] FIG. 15 is a cross-sectional view taken along a line A-A in FIG. 14, and is a cross-sectional view of the second catalyst portion provided in a second stage.

DESCRIPTION OF EMBODIMENTS

Hereinafter, embodiments of the present invention will be described in detail with reference to the drawings. The same members are denoted by the same reference numerals throughout the description of the embodiments of the present specification.

[First Embodiment]

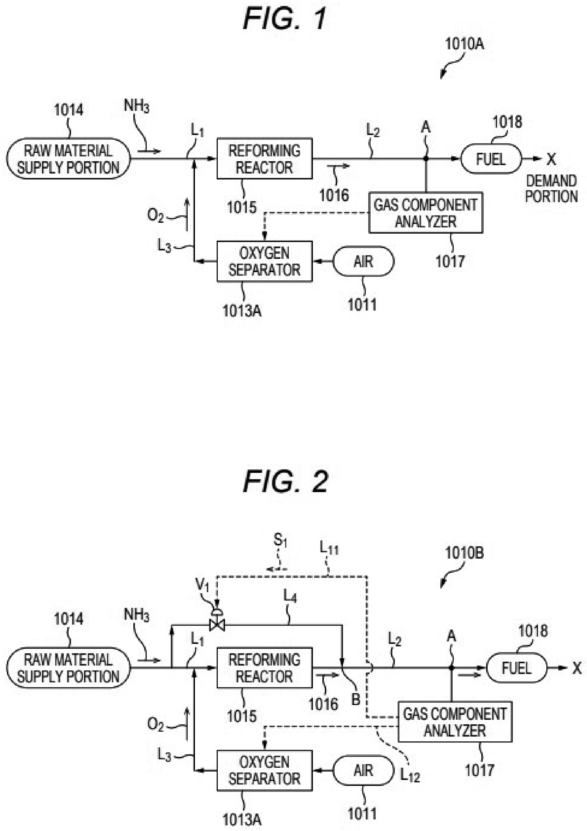

FIG. 1 is a schematic view of an ammonia-hydrogen mixed fuel production apparatus according to a first embodiment of the present invention. As shown in FIG. 1, an ammonia-hydrogen mixed fuel production apparatus 1010A according to the present embodiment includes an oxygen separator 1013 serving as an oxygen supply portion that separates oxygen ($O_2$) from air 1011 at a desired concentration, a reforming reactor 1015 that converts ammonia ($NH_3$) supplied from a raw material supply portion 1014 into hydrogen ($H_2$) by using the oxygen of the desired concentration from the oxygen separator 1013, and a gas component analyzer 1017 that measures a concentration of one or both of the hydrogen and the ammonia in a reformed gas 1016 from the reforming reactor 1015.

The raw material supply portion 1014 supplies the ammonia ($NH_3$) as a raw material, and supplies the ammonia ($NH_3$) from the raw material supply portion 1014 to the reforming reactor 1015 via an ammonia supply line $L_1$.

Further, the reformed gas 1016 reformed from the reforming reactor 1015 is used as a fuel 1018 on an external demand portion X side via a reformed gas discharge line $L_2$.

Further, the oxygen separator 1013 for acquiring the oxygen from the air 1011 is provided, and the separated oxygen is supplied to the ammonia supply line $L_1$ via an oxygen supply line $L_3$. Examples of the oxygen separator 1013 can include a cryogenic separation device, a pressure swing adsorption (PSA) device, and a membrane separation device, but the present invention is not limited to the above.

In the following description, the pressure swing adsorption device (hereinafter also referred to as "PSA") will be described as an example, but the present invention is not limited thereto.

Further, the reformed gas discharge line $L_2$ is provided with the gas component analyzer 1017 that measures "a composition ratio ($NH_3/H_2$) of the ammonia ($NH_3$) as the fuel 1018 and the hydrogen ($H_2$) or a gas composition of either one thereof", and the gas composition is measured.

Examples of the gas component analyzer 1017 can include a hydrogen detector that detects the hydrogen, an ammonia detector that detects the ammonia, and an ammonia-hydrogen composition ratio detector that detects a composition ratio of the hydrogen and the ammonia, but the present invention is not limited thereto.

Here, as a main analyzer used as the gas component analyzer 1017, for example, a gas chromatograph ($H_2$ gas and $NH_3$ gas), a thermally conductive gas analyzer ($H_2$ gas), an infrared absorption spectrophotometer ($NH_3$ gas), or the like can be used, but the present invention is not limited thereto.

As described above, the composition ratio ($NH_3/H_2$) in the reformed gas 1016 acquired by reforming the ammonia as a raw material in the reforming reactor 1015 is measured by a gas component analyzer 17, so that a fuel composition required on the demand portion X side located on a downstream side is constantly or intermittently measured.

This measurement may be separately transmitted in a control device through online, and may be automatically controlled.

As an example, a difference between the fuel composition required from the demand portion X side and a measured fuel composition may be controlled to be corrected by the control device (not shown).

Here, in the present embodiment, it is preferable to add 3 vol% to 20 vol%, more preferably 5 vol% to 17 vol% of oxygen ($O_2$) with respect to a supply amount of the ammonia ($NH_3$). This is because a hydrogen reforming ratio decreases in the case of 3 vol% or less, which is not preferable. Further, in the case of adding the oxygen more than 20 vol%, the extent of oxidation increases to be equal to or more than the amount of heat required for ammonia decomposition, and as a result, the yield of $H_2$ and thermal efficiency decrease, which is not preferable.

Here, at the time of producing the hydrogen from the ammonia, as shown in the following equation (1), in external heating, such a heat absorption amount is supplied to a reaction tube by combusting $NH_3/N_2$ in a heating furnace.

$$NH_3 \rightarrow 0.5N_2 + 1.5H_2 \text{ heat absorption } \Delta H = +45.9 \text{ kJ/mol ...} \qquad (1)$$

However, as a $NH_3$ decomposition reaction proceeds, a reaction temperature decreases, and the reaction eventually stops unless heat supply is performed.

In the present invention, when 12 vol% to 16 vol% of the oxygen is added, a heat absorption amount of the ammonia decomposition reaction can be covered by a heat generation amount due to two oxidation reactions of the following equations (2) and (3), and a high decomposition rate can be achieved.

$$NH_3 + 0.25O_2 \rightarrow H_2 + 0.5N_2 + 0.5H_2O \text{ heat generation } \Delta H = -75 \text{ kJ/mol } ... \quad (2)$$

$$H_2 + 0.5O_2 \rightarrow H_2O \text{ heat generation } \Delta H = -284 \text{ kJ/mol } ... \quad (3)$$

As described above, a conversion rate increases as the reaction temperature increases (as the amount of the added oxygen increases) and the amount of a catalyst increases, but if the amount of the added oxygen is too large, the ammonia and the generated hydrogen are oxidized (consumed) by the oxygen, and thus there is an upper limit for the amount of the added oxygen, and the amount of the added oxygen is set to, for example, 20 vol% with respect to the supply amount of the ammonia ($NH_3$). On the other hand, if the amount of the added oxygen is too small, an increase in the reaction temperature due to heat generation is small, when the reaction temperature is equal to or lower than a temperature required for the ammonia decomposition reaction, the reaction (the decomposition rate) does not proceed, and thus there is a lower limit for the amount of the added oxygen, and the amount of the added oxygen is set to, for example, 3 vol% with respect to the supply amount of the ammonia ($NH_3$).

As a reforming catalyst of the reforming reactor 1015, it is preferable to use a well-known $NH_3$-ATR catalyst and a well-known $NH_3$ decomposition catalyst alone or in combination.

When these catalysts are used in combination, the ratio of the "$NH_3$-ATR catalyst" to the "$NH_3$ decomposition catalyst" is preferably 1: 0 to 1: 10, more preferably 1: 2 to 1: 6.

In the combination of the optimum catalysts for the ammonia decomposition equation (1) and the ammonia oxidation equations (2) + (3) as described above, since a reaction rate of the oxidation reaction is high, the oxidation reaction proceeds by 100% with 20% to 30% of the whole of a catalyst layer, and since a reaction rate of the decomposition reaction is lower than that of the oxidation reaction and the reaction temperature thereof decreases as the reaction proceeds, the decomposition reaction requires more catalysts.

Therefore, when the optimum catalysts for these reactions are distributed with an amount required for the above reactions, the ratio thereof is preferably 1: 2 to 1: 6. In addition, regarding the catalyst, there are catalysts suitable for both the reactions, and in this case, one type of catalyst (1:0) may be used.

Further, the ATR catalyst is preferably a catalyst formed of one or more of, for example, a ruthenium (Ru)-based catalyst, a platinum (Pt)-based catalyst, a nickel (Ni)-based catalyst, a cobalt (Co)-based catalyst, an iron (Fe)-based catalyst, a manganese (Mn)-based catalyst, and a molybdenum (Mo)-based catalyst, but the present invention is not limited thereto.

The $NH_3$ decomposition catalyst is preferably a catalyst formed of one or more of, for example, a ruthenium (Ru)-based catalyst, a nickel (Ni)-based catalyst, a cobalt (Co)-based catalyst, an iron (Fe)-based catalyst, a manganese (Mn)-based catalyst, and a molybdenum (Mo)-based catalyst, but the present invention is not limited thereto.

The reaction temperature in the reforming reactor 1015 is, for example, 150°C to 850°C, preferably 300°C to 700°C, and a pressure therein is 0.03 MPa to 0.9 MPa, preferably 0.07 MPa to 0.7 MPa. In this way, the reason why the temperature and the pressure are respectively defined within these predetermined ranges is to efficiently progress a reforming reaction.

Although the reaction depends on the performance of the catalyst, the reaction starts at, for example, 150°C to 200°C, and the reaction rate increases with the reaction temperature. For example, the activity of the catalyst may decrease when the temperature is 650°C to 700°C or higher (for example, when aggregation of an active metal due to heat is promoted and an active surface area decreases), and thus the reaction temperature is preferably in the range of 150°C to 850°C.

In addition, when the temperature is high, material nitriding of the reaction tube proceeds, which is not preferable for both the catalyst and the reaction tube. Although a lower pressure is advantageous for hydrogen generation in terms of chemical equilibrium, the pressure is preferably 0.03 MPa to 0.9 MPa in consideration of a supply pressure to a downstream combustion device and a pressure loss at the catalyst layer or the like. A honeycomb catalyst (having a small pressure loss) may be used as the catalyst, and a low pressure such as 0.07 MPa may be advantageous for the reaction depending on a downstream device.

It is possible to supply the catalyst to, for example, an engine, a boiler, a heating furnace, or the like provided on the downstream side by using this ammonia-hydrogen mixed fuel production apparatus, or to construct a fuel supply system by mixing the catalyst with the ammonia ($NH_3$) as the raw material and using an acquired mixture as a fuel.

Here, although the gas component analyzer 17 can measure the concentration of one or both of the hydrogen and the ammonia, in the present embodiment, the measurement of the hydrogen will be described below as an example.

That is, according to requests (the $NH_3$/$H_2$ composition, a flow rate) related to the fuel 1018 from the demand portion X side such as an engine, a boiler, and a heating furnace disposed on the downstream side, the hydrogen ($H_2$) concentration in the reformed gas 1016 is detected by the gas component analyzer (the hydrogen detector) 1017 provided downstream of a reforming reactor 15, and the supply amount of the oxygen from the oxygen separator 1013 is controlled to satisfy the requested $H_2$ concentration (the decomposition rate of $NH_3$).

The decomposition rate of the ammonia ($NH_3$) increases with the amount of the oxygen ($O_2$) added with respect to the ammonia ($NH_3$) as the raw material. That is, when 0 vol% to 16 vol% of the oxygen ($O_2$) is added with respect to the ammonia ($NH_3$) as the raw material, the decomposition rate can be controlled in the range of 0 to 100 vol%.

$$NH_3 \rightarrow 0.5N_2 + 1.5H_2 ... \qquad (4) \text{ <endothermic reaction>}$$

$$2NH_3 + O_2 \rightarrow N_2 + H_2 + 2H_2O \rightarrow NH_3 + 0.25O_2 \rightarrow H_2 + 0.5N_2 + 0.5H_2O... \qquad (5) \text{ <exothermic reaction>}$$

$$H_2 + 0.5O_2 \rightarrow H_2O ... \qquad (6) \text{ <exothermic reaction>}$$

The $NH_3$ decomposition reaction as the endothermic reaction of equation (4) is promoted by utilizing the heat generated by the oxidation reactions of $NH_3$ and $H_2$ of equations (5) and (6) described above.

As a result, the ammonia is used as the raw material. A supply amount of an ammonia ($NH_3$)/hydrogen ($H_2$) mixed gas as a product and a hydrogen ($H_2$) concentration thereof can be freely controlled according to demand.

As described above, according to the present invention, in order to perform fuel supply to, for example, an engine, a boiler, a heating furnace, or the like by small-to-medium-scale hydrogen ($H_2$) production of producing the hydrogen ($H_2$) from the ammonia ($NH_3$), it is possible to adjust the ammonia ($NH_3$)/hydrogen ($H_2$) composition ratio (a composition ratio at which combustion by, for example, a combustion device on the fuel demand portion X side can be performed) of the fuel according to a purpose and a demand.

(Test Example)

Hereinafter, a test example according to the first embodiment will be described, but the present invention is not limited thereto.

Ammonia ($NH_3$) and oxygen ($O_2$) were supplied to the reforming reactor 1015 filled with 22 L of a catalyst (a commercially available ruthenium (Ru)-based catalyst) under the following reaction conditions to produce a $H_2$/$NH_3$ mixed gas fuel under the following conditions.

Here, an air separation PSA was used as an oxygen separator 13, an air 11 was supplied, and the oxygen ($O_2$) separated at the concentration of 90% was used.

The test conditions at this time were as follows.

Pressure: 0.1 MPa
Inlet temperature: 230°C
$NH_3$ flow rate: 280 $Nm^3$/hr
$O_2$ flow rate: 42 $Nm^3$/hr ($N_2$ content flow rate: 4.6 $Nm^3$/hr)

In response to a request for the hydrogen ($H_2$) concentration of 95 vol% (based on a mixed gas of $H_2$ and $NH_3$), a composition of the mixed gas acquired under the above operation conditions, in which 15 vol% of oxygen ($O_2$) is added with respect to the ammonia ($NH_3$), is as follows.

$$H_2/NH_3/N_2 = 67.8/3/29.2 \text{ in a volume ratio}$$

This is because the hydrogen ($H_2$) concentration in the $H_2$/$NH_3$ mixed gas is 95.8%.

On the other hand, as a result of controlling the supply amount of the oxygen ($O_2$) to reach a target concentration while detecting the hydrogen ($H_2$) concentration of a produced gas by the $H_2$ detector as the gas component analyzer 1017 when the request for the hydrogen ($H_2$) concentration on the demand portion X side was changed from 95% to 50%, a gas satisfying the request was acquired when the oxygen ($O_2$) was 10 vol% with respect to the ammonia ($NH_3$).

$$H_2/NH_3/N_2 = 42/19.9/38.1 \text{ in a volume ratio}$$

This is because the hydrogen ($H_2$) concentration in the $H_2$/$NH_3$ mixed gas is 52.3%.

[Second Embodiment]

FIG. 2 is a schematic view of an ammonia-hydrogen mixed fuel production apparatus.

The same component members as those of the first embodiment are denoted by the same reference numerals, and the description thereof will be omitted.

As shown in FIG. 2, in an ammonia-hydrogen mixed fuel production apparatus 1010B according to the present embodiment, the reformed gas discharge line $L_2$ for discharging the reformed gas 1016 from the reforming reactor 1015 is provided with a bypass line $L_4$ for directly supplying the ammonia ($NH_3$) as the raw material from a raw material supply portion 14. Here, the bypass line $L_4$ has an ammonia introduction position B between the reforming reactor 15 and a measurement point A of the gas component analyzer 17 on a downstream side of the reforming reactor 15. In FIG. 2, the reference numeral $L_{11}$ denotes a first signal line, and the reference numeral $V_1$ denotes a first on-off valve.

As described above, by providing the bypass line $L_4$, when the request for the hydrogen ($H_2$) concentration in the gas as a fuel 18 from the demand portion X side is low, or when it is necessary to quickly respond to a request for reducing the hydrogen ($H_2$) concentration from a high concentration (for example, 100 Vol%) to a low concentration (for example, 30 Vol%), a first signal $S_1$ can be sent from the gas component analyzer 17 to the first on-off valve $V_1$, the first on-off valve $V_1$ can be turned on, the ammonia ($NH_3$) from the raw material supply portion 14 can bypass the reforming reactor 15 via the bypass line $L_4$, the ammonia can be directly supplied to the front of the hydrogen detector as the gas component analyzer 17, and the concentration can be quickly adjusted to the required concentration (the low concentration (for example, 30 Vol%)).

[Third Embodiment]

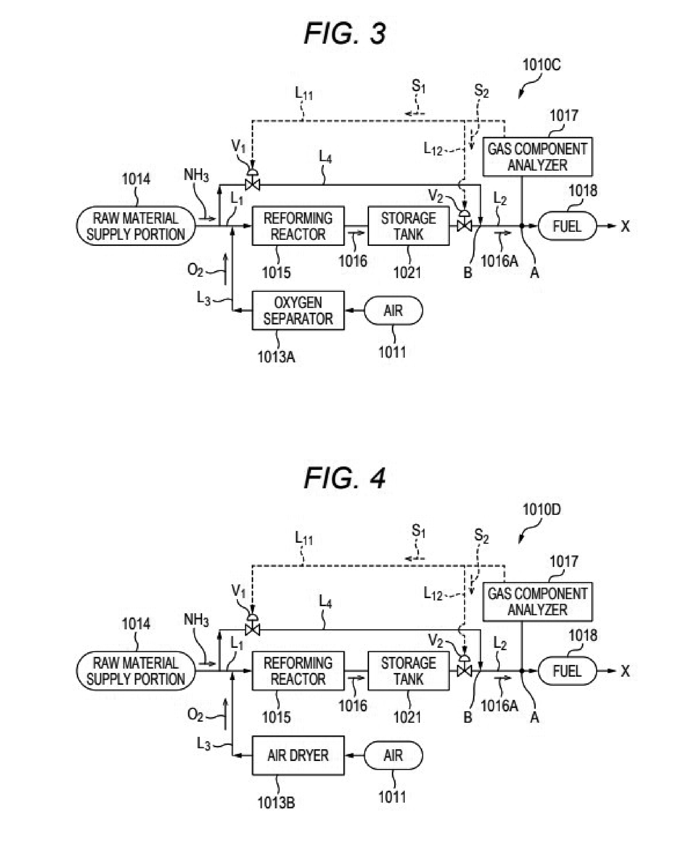

FIG. 3 is a schematic view of an ammonia-hydrogen mixed fuel production apparatus.

The same component members as those of the first and second embodiments are denoted by the same reference numerals, and the description thereof will be omitted.

As shown in FIG. 3, an ammonia-hydrogen mixed fuel production apparatus 1010C according to the present embodiment is provided with a storage tank 1021 for temporarily storing the reformed gas 1016, in the reformed gas discharge line $L_2$ for discharging the reformed gas 1016 from the reforming reactor 1015. In FIG. 3, the reference numeral $L_{12}$ denotes a second signal line, and the reference numeral $V_2$ denotes a second on-off valve. The storage tank 1021 stores a reformed gas 16 at a constant concentration.

In the present embodiment, by providing the bypass line $L_4$ and the storage tank 1021, when the request for the hydrogen ($H_2$) concentration in the gas as the fuel 1018 is low, or when it is necessary to quickly respond to the request for reducing the hydrogen ($H_2$) from a high concentration (for example, 100 Vol%) to a low concentration (for example, 30 Vol%), the first signal $S_1$ can be sent from the gas component analyzer 1017 to the first on-off valve $V_1$, the ammonia from the raw material supply portion 1014 that adjusts the first on-off valve $V_1$ can bypass the reforming reactor 15 via the bypass line $L_4$, the ammonia can be directly supplied to the front of the gas component analyzer 1017, and a composition of an adjusted gas 16A can be quickly adjusted to reach the requested concentration (the low concentration (for example, 30 Vol%)).

At this time, a second signal $S_2$ may be sent from the gas component analyzer 1017 to the second on-off valve $V_2$, the second on-off valve $V_2$ may be adjusted, and a supply ratio of the reformed gas 1016 may be adjusted to acquire the adjusted gas 16A.

Accordingly, a gas composition of the reformed gas and the ammonia can be adjusted (for example, 30/70 $\Rightarrow$ 20/80) according to the composition (for example, 30/70) of the ammonia and the hydrogen in the gas component analyzer 1017.

[Fourth Embodiment]

FIG. 4 is a schematic view of an ammonia-hydrogen mixed fuel production apparatus.

The same component members as those of the first to third embodiments are denoted by the same reference numerals, and the description thereof will be omitted.

Although the oxygen supply portion that supplies oxygen has been described by using an oxygen separator 13A in the first to third embodiments, the oxygen supply portion is not limited thereto in the present invention, and for example, an air dryer 1013B that removes moisture in the supplied air may be used.

As shown in FIG. 4, an ammonia-hydrogen mixed fuel production apparatus 10D according to the present embodiment is provided with the air dryer 1013B that removes the moisture in the air 1011 supplied by, for example, an air compressor. The oxygen supply portion according to the present embodiment includes the air compressor (not shown) that supplies the air, and the air dryer 1013B provided downstream of the air compressor. Here, the air dryer 1013B includes an adsorption method and a cooling method.

The air dryer 1013B removes the moisture in the air, and prevents a catalyst such as platinum (Pt) used in the reforming reactor 1015 from being poisoned by water. The adsorption method refers to, for example, moisture removal using zeolite.

In addition, the cooling method can remove the moisture by adjusting a saturated vapor pressure corresponding to a cooling temperature (for example, cooling to 20°C or lower). The cooling temperature is preferably 20°C or lower, more preferably -20°C or lower.

According to the present embodiment, since the moisture in the air is removed when the oxygen is supplied from the air, for example, the platinum (Pt) catalyst used in the reforming reactor 1015 is prevented from being poisoned.

[Fifth Embodiment]

Next, a specific variation of the reforming reactor in each embodiment of the first embodiment to the fourth embodiment will be described.

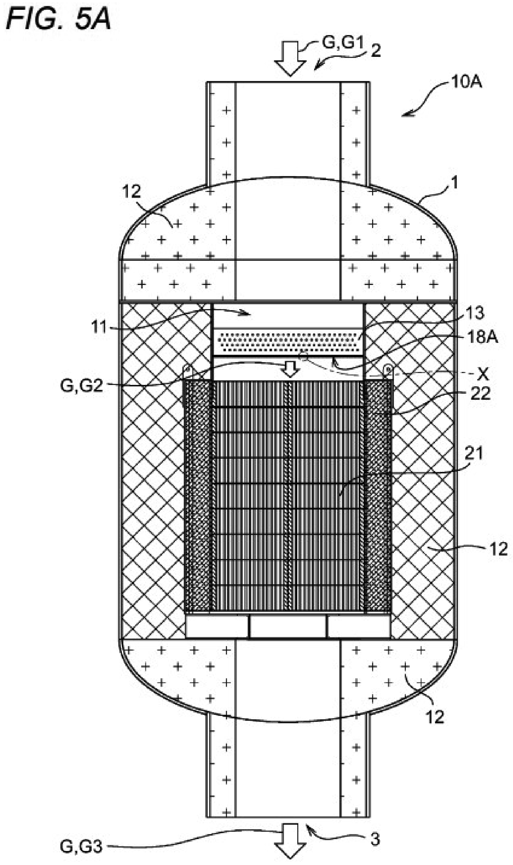

FIGS. 5A to 5D is a cross-sectional view showing an internal structure of a reactor 10 according to a fifth embodiment. A reactor 10A is a reactor that performs autothermal reforming (ATR) of the ammonia.

The reactor 10 includes a first catalyst portion 13 and a second catalyst portion 21.

In the reactor 10A, heat is generated by combustion of a combustible gas such as hydrogen in the first catalyst portion 13. When a gas G2 having the generated heat flows into the second catalyst portion 21, the second catalyst portion 21 is heated. In the second catalyst portion 21, reaction heat of the decomposition reaction (the endothermic reaction) of the ammonia is covered by using heat generated by a partial oxidation reaction (an exothermic reaction) of the ammonia using the oxygen. Therefore, the reactor 10A can perform a thermally self-supporting operation without providing a heat supply source (a heating furnace or the like) outside the reactor 10A, and can decompose the ammonia (produce the hydrogen) with an efficient and simple configuration in terms of a reaction device.

The reactor 10A has a configuration capable of causing a reaction for heating the second catalyst portion 21 used for ammonia reforming before the ammonia reforming. This reaction proceeds inside the reactor 10A, and it is not necessary to provide a heat source for supplying heat into the reactor 10A outside the reactor 10A. With such a configuration, the reactor 10A is quickly started up at the time of performing the ammonia reforming, and a time required for the start of the reforming and a load variation can be shortened.

The reactor 10A includes a housing 1, and the housing 1 includes an introduction port 2 and an outlet port 3. The housing 1 has a cylindrical shape that is circular in a top view, but may have a square shape that is rectangular in a top view. Cross-sectional areas of the introduction port 2 and a channel 11 formed inside are different, and the introduction port 2 and the outlet port 3 are narrower than the internal channel 11 (a portion in which the cross-sectional area is locally widened). The channel 11 is formed between the introduction port 2 and the outlet port 3. Although details will be described later, a gas G (gases G1, G2, and G3) flows through the channel 11.

The channel 11 is partitioned by a heat insulating material 12 disposed along an inner wall of the housing 1. The housing 1 does not have a complete cylindrical shape, but has a shape in which an inner portion is locally narrowed in the vicinity of the introduction port 2. Further, in the vicinity of the outlet port 3, the housing 1 has a shape narrowed toward the outlet port 3. In the channel 11 formed by being surrounded by the heat insulating material 12, a shape between the introduction port 2 and an upper end of a locally widening portion formed below the introduction port 2 is a cylindrical shape (a circular shape in a top view).

However, the shape between the introduction port 2 and the upper end of the locally widening portion formed below the introduction port 2 may be a rectangular cylindrical shape (a rectangular shape in a top view).

The introduction port 2 is an opening for introducing the gas G1 into the housing 1 (the reactor 10A). The gas G1 is a gas containing ammonia and a combustible gas other than the ammonia. Therefore, the ammonia and the combustible gas other than the ammonia are introduced into the housing 1 through the introduction port 2. Hereinafter, the term "combustible gas" refers to a combustible gas excluding ammonia. The definition and examples of the combustible gas will be described later.

It is not necessary to simultaneously supply the ammonia and the combustible gas in a mixed state. Therefore, for example, the ammonia and the combustible gas are introduced into the reactor 10 through the introduction port 2 in combination or independently. The combustible gas may be, for example, hydrogen. The gas G1 may also contain a component to be used for the combustion of the combustible gas and the ammonia reforming, for example, oxygen. Further, the gas G1 may contain a gas other than the ammonia, the combustible gas, and the oxygen. The gas G1 introduced into the housing 1 is supplied to the first catalyst portion 13. The gas G1 introduced into the first catalyst portion 13 generates the gas G2 by a catalyst reaction.

The gas G2 flows out from the first catalyst portion 13, and the gas G2 flows into the second catalyst portion 21. The gas G2 contains the ammonia heated by the heat generated by the combustion of the combustible gas in the gas G1, and the oxygen that is not used in the first catalyst portion 13 in a first stage. The gas G2 may also contain the combustible gas that is not combusted.

The gas G3 generated by the catalyst reaction flows out from the second catalyst portion 21, and the gas G3 flows out from the outlet port 3. The outlet port 3 is an opening through which the gas G3 flows out of the housing 1 (the reactor 10). The gas G3 is, for example, the hydrogen generated in the reactor 10, nitrogen generated along with the hydrogen, an unreacted gas or an entrained gas in the introduced gas G1, or the like. Hereinafter, the gases G1, G2, and G3 are collectively referred to as the gas G.

The reactor 10 has, for example, a small-to-medium-scale size capable of generating hydrogen of 100 $m^3$ to 2,000 $m^3$ per hour. The gas hourly space velocity (GHSV) of the gas G that can flow through the inside of the reactor 10 is, for example, 3,000/hr or more and 50,000/hr or less, preferably 5,000/hr or more and 30,000/hr or less. Therefore, regarding the size of the reactor 10, in the case of the housing 1 having a cylindrical shape (a substantially cylindrical shape), a diameter of the housing 1 can be set to, for example, 300 mm or more and 800 mm or less. In the case of the housing 1 having a square shape that is rectangular in the top view, both a width and a depth of the housing 1 can be set to 300 mm or more and 800 mm or less.

As in the present disclosure, when the diameter, the width, and the depth are less than, for example, 1 m, an outer surface area of the housing 1 per unit volume of the first catalyst portion 13 and the second catalyst portion 21 increases, and heat dissipation to the outside of a wall surface of the reactor 10A is likely to occur. Further, when the diameter, the width, and the depth of the housing 1 are increased to restrain the heat dissipation, a height of the housing 1 is reduced. Accordingly, a flow velocity of the gas G decreases, and there is a possibility that the gas G is not uniformly dispersed inside the housing 1 or that the gas G is difficult to diffuse into the catalyst. Therefore, in the example of the present disclosure, the reactor 10A has a compact size, and achieves sufficient heat insulation with respect to the first catalyst portion 13 and the second catalyst portion 21. Accordingly, the heat generated by the combustion of the combustible gas and the oxidation of the ammonia is prevented from being dissipated from an outer wall of the reactor 10A as much as possible, and covers the heat absorption amount of the decomposition reaction of the ammonia, whereby high hydrogen yield and high thermal efficiency can be achieved.

The first catalyst portion 13 is disposed inside the housing 1 and is disposed between the introduction port 2 and the second catalyst portion 21. By disposing the first catalyst portion 13 at this position, the second catalyst portion 21 can be heated by the heat generated by the catalyst reaction in the first catalyst portion 13, and the ammonia can be reformed in the second catalyst portion 21 by this heating. As a result, a time (a startup time) until the ammonia reforming is performed can be shortened.

The first catalyst portion 13 and the second catalyst portion 21 are provided in the channel 11 inside the housing 1. The first catalyst portion 13 is provided on an upstream side of a gas flow in the channel 11, and the second catalyst portion 21 is provided on a downstream side of the gas flow in the channel 11. Therefore, the gas G2 flowing out from the first catalyst portion 13 flows into the second catalyst portion 21.

The first catalyst portion 13 includes a first catalyst. The first catalyst generates heat by combusting (oxidizing) the combustible gas in the gas G1 introduced from the introduction port 2. In the example of the present disclosure, the combustible gas is introduced from the introduction port 2 together with the ammonia. However, the combustible gas may be introduced from the introduction port 2 separately from the ammonia. In the example of the present disclosure, first, the gas G1 containing the ammonia and the combustible gas is introduced from the introduction port 2, and the combustible gas is selectively combusted in the first catalyst portion 13, for example. Accordingly, a reaction gas containing the ammonia is heated by the heat generated by the combustion of the combustible gas, and the reaction gas serves as a heat medium to heat the second catalyst portion 21 on a downstream side.

In the first catalyst portion 13, it is preferable that the ammonia is not combusted at all, or that the amount of the ammonia combusted is very small due to the selective combustion of the combustible gas as described above. Therefore, for example, the combustible gas can be selectively combusted by using a catalyst capable of selectively combusting the combustible gas or setting a temperature (for example, 80°C or lower) at which the combustible gas can be selectively ignited (combusted).

The type of the combustible gas is not particularly limited as long as the combustible gas is a gas other than the ammonia and is easily combusted from room temperature (for example, 30°C). For example, in addition to the combustible gas defined by Container Safety Rules (Ordinance of the Ministry of International Trade and Industry No. 50 of 1966), which is the Japanese law, at least one of gases (vapors) of alcohols such as methanol, ethanol, and propanol may be used.

In the example of the present disclosure, the first catalyst included in the first catalyst portion 13 is platinum, and the combustible gas is hydrogen. Therefore, a reaction represented by the following thermal chemical reaction equation (11) proceeds.

$$H_2 + 1/2O_2 \rightarrow H_2O \text{ heat generation } \Delta H = -284 \text{ kJ/mol} \quad ... \quad (11)$$

The heat generated by the combustion in the first catalyst portion 13 is the heat generated by the combustion of the combustible gas. Therefore, the amount of the heat generated can be controlled by a combustion amount of the combustible gas, that is, the amount of the combustible gas in the gas G1. Therefore, by providing the first catalyst portion 13 in which the combustible gas is combusted, the heat generation amount can be controlled, and a heating temperature of the housing 1 can be prevented.

The first catalyst portion 13 is configured by disposing (filling) the particulate first catalyst on, for example, a porous plate. The particle size of the first catalyst is, for example, 1 mm$\varphi$ or more and 10 mm$\varphi$ or less.

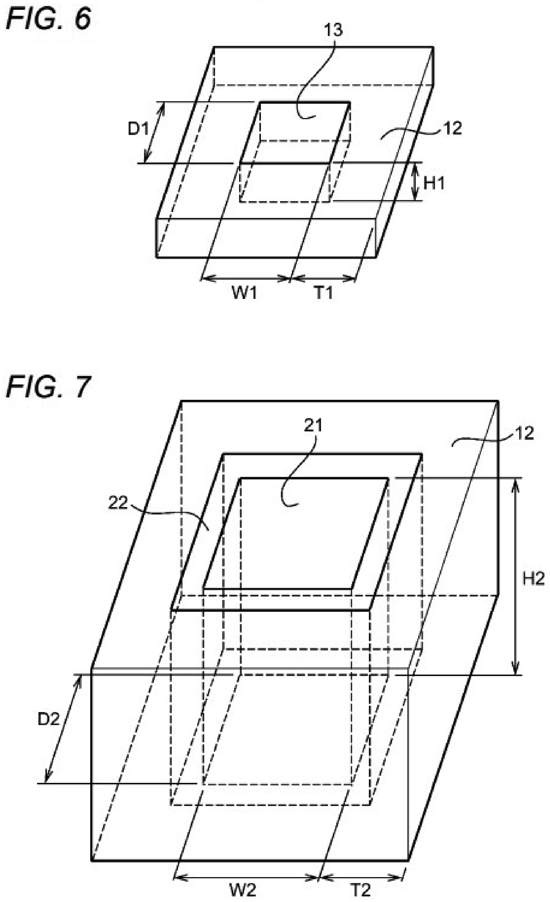

FIG. 6 is a perspective view of the first catalyst portion 13, and is a view for illustrating the size of the first catalyst portion 13. FIG. 6 also shows the heat insulating material 12 surrounding the first catalyst portion 13. In FIG. 6, for convenience, the shape of the heat insulating material 12 is shown in a square shape, but the shape is not limited thereto.

The first catalyst portion 13 has a cubic shape or a rectangular parallelepiped shape (a square shape), and has a width W1, a depth D1, and a height H1. When the first catalyst portion 13 is particulate, the width W1, the depth D1, and the height H1 of the whole of particles when the particles are arranged (filled) in a square shape are defined. When the first catalyst portion 13 is a honeycomb catalyst, intervals between opposing outer surfaces of the honeycomb catalyst are the width W1, the depth D1, and the height H1.

H1/W1 is, for example, 0.1 or more and 1.0 or less, preferably 0.3 or more and 0.7 or less. W1/D1 is, for example, 0.5 or more and 2 or less, preferably 0.9 or more and 1.1 or less, and more preferably 1. In addition, a thickness T1 of the heat insulating material 12 at a portion surrounding the first catalyst portion 13 is, for example, 50 mm or more and 300 mm or less, preferably 100 mm or more and 200 mm or less.

Returning to FIGS. 5A to 5D, the heat insulating material 12 is provided on the inner wall of the housing 1. As the heat insulating material 12, different heat insulating materials may be used in the vicinity of the introduction port 2 and the outlet port 3, and at a portion accommodating the first catalyst portion 13 and the second catalyst portion 21. The heat insulating material 12 is made of a material having heat resistance and excellent in mechanical strength, and has flexibility (elasticity) to some extent. Therefore, the heat insulating material 12 and a heat insulating material 14 are made of different materials in the example of the present disclosure, but may be made of the same material by adjusting a shape, for example. The heat insulating material 12 is made of, for example, a material having heat resistance and a string shape or a fiber shape, and is specifically, for example, a ceramic fiber or a cement castable, but is not limited thereto. The flexibility (the elasticity) of the heat insulating material 12 according to the present embodiment is not as high as that of the heat insulating material 14 to be described later with reference to the third embodiment.

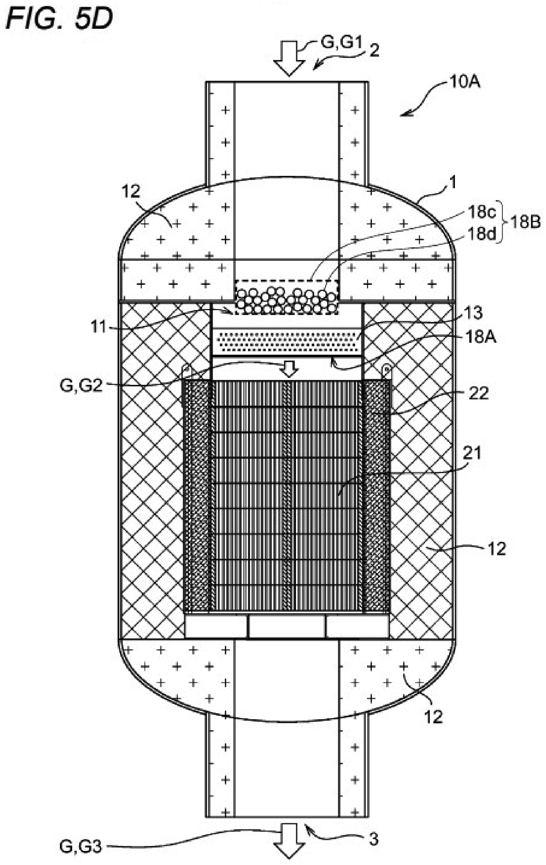

The reactor 10A includes a first dispersion portion 18A as shown in FIG. 5A or a second dispersion portion 18B as shown in FIG. 5D.

As shown in FIG. 5A, the first dispersion portion 18A is provided between the first catalyst portion 13 and the second catalyst portion 21. By providing the first dispersion portion 18A between the first catalyst portion 13 and the second catalyst portion 21 in this manner, the gas G2 flowing out from the first catalyst portion 13 is dispersed toward the second catalyst portion 21.

In addition, by providing the first dispersion portion 18A between the first catalyst portion 13 and the second catalyst portion 21 as shown in FIG. 5A, it is possible to restrain the heat (the gas G2) generated in the first catalyst portion 13 from being conducted to only the vicinity immediately below the first catalyst portion 13, and it is possible to easily bring the heat into contact with the entire second catalyst portion 21 disposed below the first catalyst portion 13 uniformly.

As shown in FIG. 5A, in the first dispersion portion 18A according to the present disclosure provided between the first catalyst portion 13 and the second catalyst portion 21, the gas G2 may be blown out obliquely downward from the center of the first catalyst portion 13. In this case, the gas G2 may be blown out not only obliquely downward but also directly downward. Further, the porous plate filled with a particulate first catalyst 13 may also serve as the first dispersion portion 18A. In addition, the first dispersion portion 18A may be separately and independently provided below the first catalyst 13.

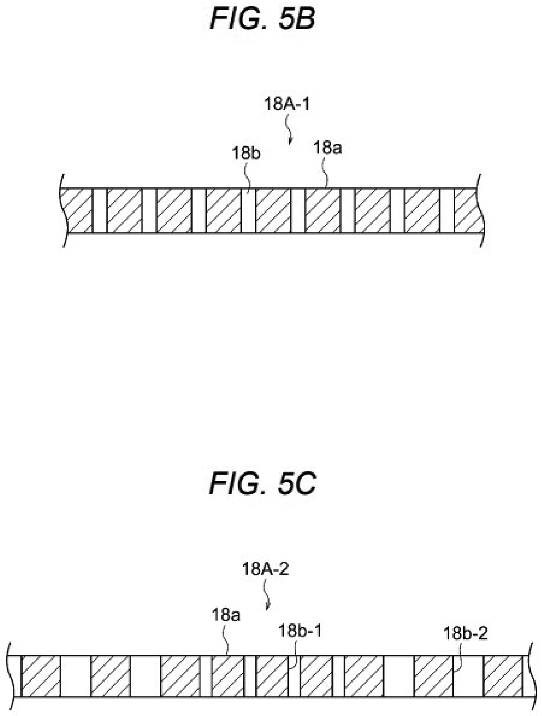

FIGS. 5B and 5C are enlarged views of a portion X of the first dispersion portion 18A in FIG. 5A, and illustrate modifications of the first dispersion portion 18A.

In FIG. 5B, pores 18b are uniformly formed in a dispersion plate 18a constituting a first dispersion portion 18A-1.

On the other hand, in FIG. 5C, two types of pores (pores 18b-1 and 18b-2) are formed in the dispersion plate 18a constituting a first dispersion portion 18A-2, and an aperture ratio is adjusted by setting the pores 18b-1 having a small pore diameter on a center side and setting the pores 18b-2 having a large pore diameter on a peripheral side of the pores 18b-1. Accordingly, in the first dispersion portion 18A-2, the discharge of the gas G2 flowing out may be made uniform entirely on the peripheral side rather than the center side in a horizontal direction.

In addition, as shown in FIG. 5D, the second dispersion portion 18B according to another example can disperse the introduction gas G1 toward the first catalyst portion 13 by being provided between the introduction port 2 and the first catalyst portion 13.

In the illustration shown in FIG. 5D, the first dispersion portion 18A is also provided, but when a dispersion condition is good, the first dispersion portion 18A may not be provided.

Further, a gas flow may be uniformly formed inside the second dispersion portion 18B by providing the second dispersion portion 18B shown in FIG. 5D on an upper side of the first catalyst portion 13, and a temperature distribution with respect to the disposed second catalyst portion 21 may be restrained as much as possible.

In a case of being provided between, for example, the introduction port 2 and the first catalyst portion 13 like the second dispersion portion 18B, for example, a basket filled with a spherical or Raschig ring-shaped filling member may be disposed.

Alternatively, a member such as a bottomed cylinder having an opening on a side surface, a lower surface, or the like, a louver or a wind direction plate for adjusting a wind direction, may be provided.

In addition, as shown in FIG. 5D of the present disclosure, a spherical basket 18 made of a wire net, which is filled with alumina balls 18d, may be provided at a position at which the channel expands from the introduction port 2 of the housing 1 (a bottom portion of the basket protrudes to a space portion of the channel 11), and the rectified gas may be dispersed in an enlarged portion of the reactor from the introduction port 2 by passing through a filling layer constituted by spherical alumina balls 18c.

The reactor 10A includes the second catalyst portion 21. The second catalyst portion 21 has a honeycomb shape, and a specific structure of the second catalyst portion 21 will be described later with reference to the third embodiment. The second catalyst portion 21 is disposed between the first catalyst portion 13 and the outlet port 3, and includes a second catalyst. The second catalyst is a catalyst that is heated by the heat generated in the first catalyst portion 13 and generates the hydrogen from the ammonia contained in the gas G2.

The second catalyst supported in the second catalyst portion 21 is a catalyst that reforms the ammonia. The hydrogen is generated from the ammonia by the reforming. A specific component of the catalyst is not particularly limited as long as the catalyst is capable of reforming the ammonia, and for example, it is preferable to use a transition metal such as Ru, Co, Ni, Fe, or Pt as a main component.

FIG. 7 is a perspective view of the second catalyst portion 21, and is a diagram illustrating the size of the second catalyst portion 21. FIG. 7 also shows the heat insulating material 12 and a heat insulating material 22 that surround the second catalyst portion 21.

The second catalyst portion 21 is surrounded by a plurality of types of the heat insulating materials 12 and 22. The second catalyst portion 21 has a cubic shape or a rectangular parallelepiped shape (a square shape), and has a width W2, a depth D2, and a height H2. H2/W2 is, for example, 0.5 or more and 3 or less, preferably 0.8 or more and 2 or less. W2/D2 is, for example, 0.5 or more and 2 or less, preferably 0.9 or more and 1.1 or less, and more preferably 1. A total thickness T2 of the heat insulating materials 12 and 22 at a portion surrounding the second catalyst portion 21 is, for example, 50 mm or more and 300 mm or less, preferably 100 mm or more and 200 mm or less.

According to the relation between the first catalyst portion 13 and the second catalyst portion 21, W2/W1 is, for example, 1 or more and 5 or less, preferably 2 or more and 3 or less. In addition, the first catalyst portion 13 and the second catalyst portion 21 are laterally covered with the heat insulating material. The ratio (T1/T2) of the thickness T1 of the heat insulating material covering the first catalyst portion 13 to the thickness T2 of the heat insulating materials covering the second catalyst portion 21 is, for example, 1 or more and 3 or less, preferably 1 or more and 2 or less.

Returning to FIGS. 5A to 5D, the reforming in the second catalyst portion 21 proceeds mainly in two stages of reaction.

Specifically, for example, the partial oxidation of the ammonia (the following reaction equation (12)), the oxidation reaction of the ammonia (the following reaction equation (13)), and the decomposition reaction of the ammonia (the following reaction equation (14)) are included. The reactions represented by the reaction equations (2) and (13) proceed mainly on an upper side (in a first stage) of the second catalyst portion 21, and the reaction represented by the reaction equation (14) proceeds mainly on a lower side (in a second stage) of the second catalyst portion 21. However, the reforming does not necessarily proceed in two stages.

$$NH_3 + 1/4O_2 \rightarrow H_2 + 1/2N_2 + 1/2H_2O \text{ heat generation } \Delta H = -75 \text{ kJ/mol } ... \quad (12)$$

$$NH_3 + 3/4O_2 \rightarrow 1/2N_2 + 3/2O_2 \text{ heat generation } \Delta H = -317 \text{ kJ/mol } ... \quad (13)$$

$$NH_3 \rightarrow 3/2H_2 + 1/2N_2 \text{ heat absorption } = +45.9 \text{ kJ/mol } ... \quad (14)$$

In particular, the hydrogen is generated by the reaction represented by the reaction equation (14), and the gas G3 containing the hydrogen is acquired.

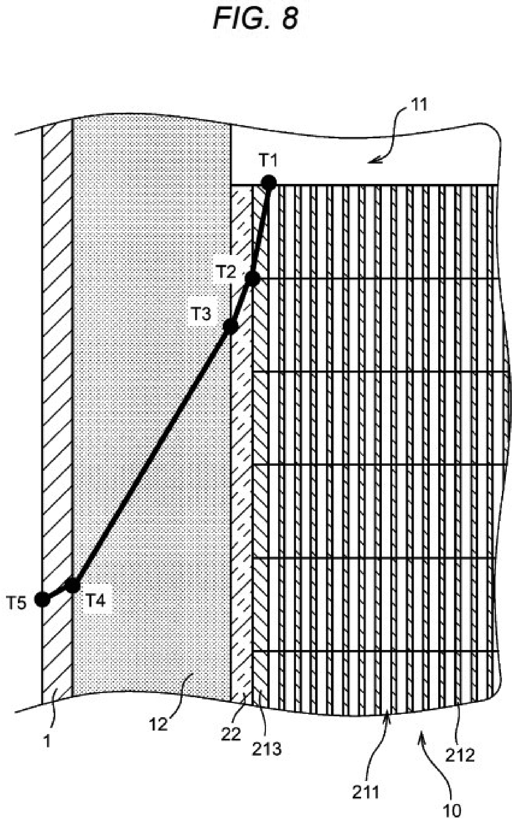

FIG. 8 is a diagram illustrating a temperature gradient between the second catalyst portion 21 and the housing 1. For example, the gas G2 having a temperature T1 (for example, about 630°C) reaches the second catalyst portion 21 (particularly, second channels 211). As a result of heat conduction inside an end portion 213 of the second catalyst portion 21, a temperature of an outer surface of the second catalyst portion 21 decreases to a temperature T2 (for example, about 450°C). Further, the heat is further less likely to be conducted in the heat insulating material 22 wound around the second catalyst portion 21, and a temperature of a surface of the heat insulating material 22 opposite to the second catalyst portion 21 decreases to a temperature T3 (for example, about 350°C). Finally, the heat is less likely to be conducted due to the heat insulating materials 12 and 22, the temperatures of surfaces of the heat insulating materials 12 and 22 opposite to the second catalyst portion 21 decrease to a temperature T4 (for example, 70°C or lower). Finally, the heat is slightly conducted in the housing 1, and a temperature of an outer surface of the housing 1 becomes a temperature T5 (for example, 50°C or lower). Therefore, damage (oxidation and corrosion) to a material (for example, carbon steel) constituting the housing 1 due to the heat can be restrained.

According to the ATR, the GHSV can be increased as compared with catalytic cracking, which is another technique for generating hydrogen from ammonia, and thus the ATR is advantageous in terms of the amount of the produced hydrogen. However, since the GHSV is large, a pressure loss at the second catalyst portion 21 increases. In addition, since a large amount of heat is generated by the oxidation reaction in the second catalyst portion 21, a temperature inside the reactor 10A is 600°C or higher.

According to the decomposition reaction of the ammonia, the reaction is shifted to a product (hydrogen) side due to a lower pressure and a higher temperature, which is advantageous from the viewpoint of chemical equilibrium. However, an inlet pressure of the reactor 10 is set to be high when the pressure loss is large, which is disadvantageous in terms of chemical equilibrium and compression energy of the gas G1 (the raw material gas). Here, the high temperature is advantageous in terms of chemical equilibrium. However, when the temperature is high, the reactor 10A (particularly, the housing 1) is used in a temperature range in which the nitriding is likely to occur. Specifically, for example, in the temperature range of, for example, 500°C to 700°C, which is the temperature inside the reactor 10, nitriding of iron, cobalt, molybdenum, or the like proceeds due to nitrogen generated by the decomposition of the ammonia, and a structure constituting the reactor 10 becomes brittle. For this reason, a high-grade material (for example, the "Inconel 600" (registered trademark), which is less likely to be nitrided, is used as much as possible, and the temperature inside the reactor 10 needs to be kept low. Therefore, the production cost of the hydrogen increases, and the decomposition reaction of the ammonia is less likely to proceed.

Therefore, in the reactor 10A according to the present disclosure, in order to restrain the heat dissipation to the outside of the reactor 10 and lower the temperature of the structure constituting the reactor 10 to a temperature or lower (for example, 450°C or lower), which is lower than about 600°C as a nitriding temperature, a side surface of the first catalyst portion 13 is wound (covered) with the heat insulating material 12, and a side surface of the second catalyst portion 21 is wound (covered) with the heat insulating materials 12 and 22. Accordingly, the heat dissipation through the side surfaces of the first catalyst portion 13 and the second catalyst portion 21 can be restrained, and a surface temperature (an external temperature) of the reactor 10 can be lowered to the nitriding temperature or lower (for example, 80°C or lower).

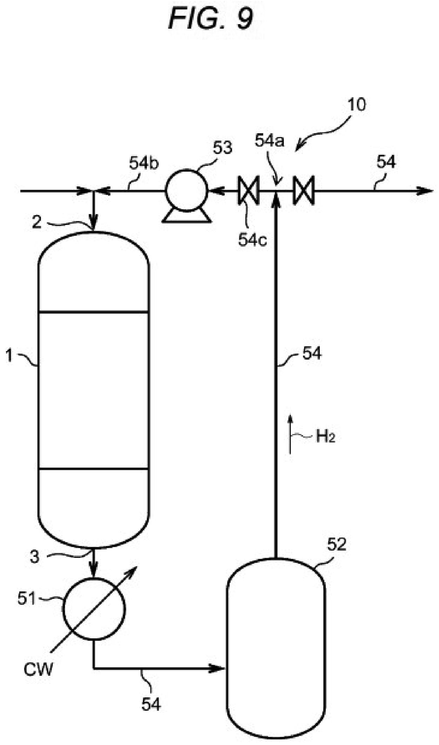

FIG. 9 is a diagram showing a structure for starting up the reactor 10A by using at least a part of the hydrogen generated in the second catalyst portion 21. The reactor 10 includes a heat exchanger 51, a tank 52, a pump 53, an outflow channel 54, and a return channel 54b. The tank 52 stores the hydrogen generated in the second catalyst portion 21 and flowing out from the outlet port 3. The hydrogen flowing out from the outlet port 3 is cooled to, for example, 40°C or lower by a cooling water CW in the heat exchanger 51, and flows into the tank 52. The tank 52 is provided in the outflow channel 54 and stores the hydrogen flowing out. The outflow channel 54 is used for flowing out the hydrogen from the outlet port 3, and is, for example, a pipe. The return channel 54b is branched from a branch portion 54a of the outflow channel 54 and returns the hydrogen to the introduction port 2, and is, for example, a pipe. The hydrogen in the tank 52 is returned to the introduction port 2 by driving of the pump 53. The return channel 54b is provided with valves 54c that adjust the flow rate of the hydrogen. The hydrogen from the outflow channel 54 is used as a product.

The first startup of the reactor 10A is performed by using, for example, a combustible gas stored in a separately provided cylinder or the like (for example, hydrogen in a hydrogen cylinder). As the reforming proceeds, the hydrogen is generated in the second catalyst portion 21 as represented by the reaction equation (4), and the generated hydrogen is stored in the tank 52. When the reactor 10 is started up, a part or all of the hydrogen stored in the tank 52 is used as the combustible gas. Accordingly, the cylinder or the like is unnecessary at the time of the second or subsequent startup.

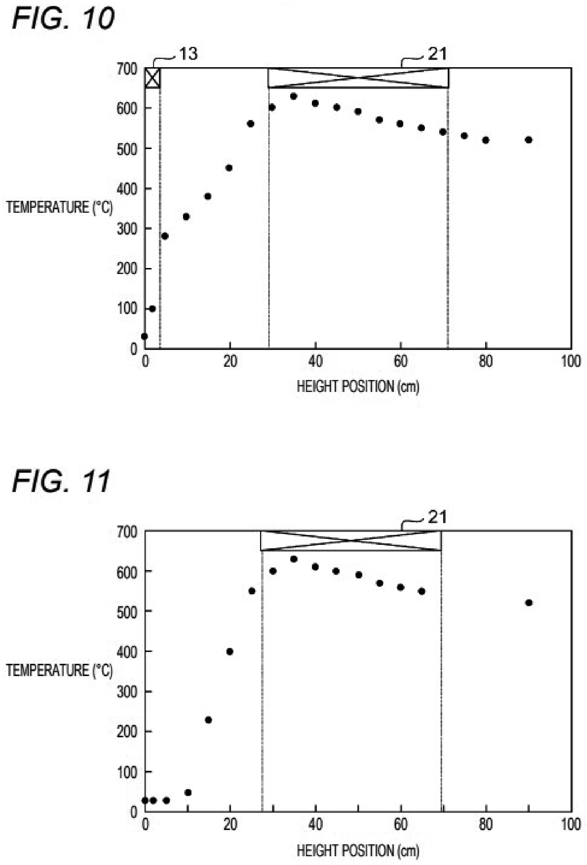

FIG. 10 is a graph showing an example of the temperature distribution inside the reactor 10 when the combustible gas is combusted in the first catalyst portion 13 under the specific reaction conditions according to the first embodiment. The graph shown in FIG. 10 shows the temperature distribution at the time of starting up the reactor 10 for the ammonia reforming. The horizontal axis represents a height position (cm) in a direction toward the second catalyst portion 21 (the downstream side of the gas flow) starting from an upper end of the first catalyst portion 13, and the vertical axis represents the temperature. For reference, the first catalyst portion 13 and the second catalyst portion 21 are shown at corresponding positions among the height positions indicated by the horizontal axis in FIG. 10.

The reaction conditions will be described. In the reactor 10 for producing the hydrogen of 300 Nm$^3$/hr, an alumina catalyst (having a spherical shape of 3 mm$\varphi$) supporting 2 wt% of platinum was used as the first catalyst portion 13. As the second catalyst portion 21, a honeycomb catalyst (W1 = 150 mm, D1 = 150 mm, H1 = 50 mm) supporting cobalt was used. The width ratio: W2/W1 was set to 1, and the thickness ratio: T1/T2 of the heat insulating materials was set to 1. The first catalyst portion 13 was disposed between the introduction port 2 and the second catalyst portion 21 in a portion having the same cross-sectional area as the second catalyst portion 21. Specifically, the cross-sectional areas of the first catalyst portion 13 and the second catalyst portion 21 in the horizontal direction were both 300 mm $\times$ 300 mm = 90,000 mm$^2$. A filling amount of the first catalyst was 3 L, and a filling amount of the second catalyst was 40.5 L.

After hydrogen reduction at 600°C, the flow rates of the ammonia and the oxygen in the gas G1 were 250 Nm$^3$/hr and 40 Nm$^3$/hr, respectively, 10 Nm$^3$/hr of hydrogen was added thereto, and the acquired mixture was supplied to the first catalyst portion 13 (for the startup of the reactor 10). At this time, the temperature distribution of the first catalyst portion 13 and the second catalyst portion 21 is shown in FIG. 10.

EP 4 741 337 A1

When the gas G1 is introduced and ignited in the first catalyst portion 13, the temperature in the first catalyst portion 13 rapidly increases due to the combustion heat of the hydrogen. Then, a temperature in the vicinity of an outlet port of the first catalyst portion 13 reaches, for example, about 180°C to 300°C, which is a temperature at which the partial oxidation reaction (the reaction represented by the reaction equation (2) of the ammonia proceeding in the vicinity of an inlet of the second catalyst portion 21 on the downstream side can proceed.

The inside of a reactor 10B is in a heat insulation state due to the heat insulating materials 12 and 22, and the like. For example, the second catalyst portion 21 is heated by the inflow of the gas G2 at about 200°C or higher, and the partial oxidation reaction and the oxidation reaction of the ammonia represented by the reaction equations (2) and (3) proceed in the vicinity of the inlet of the second catalyst portion 21. Since these reactions are exothermic reactions, the temperature of the gas G flowing through the second catalyst portion 21 further increases, and the temperature of the flowing gas G increases to, for example, 600°C or higher. However, the decomposition reaction of the ammonia (a production reaction of the hydrogen) represented by the reaction equation (4) becomes a main reaction toward the downstream side in the second catalyst portion 21. Therefore, the temperature of the gas G flowing through the second catalyst portion 21 starts to decrease.

FIG. 11 is a graph showing the temperature distribution inside the reactor 10 when the ammonia reforming is performed in the reactor 10A without adding the combustible gas. The graph shown in FIG. 11 is a graph acquired when the ammonia reforming is performed by using the heated second catalyst portion 21 as shown in the graph of FIG. 10.

The temperature of the second catalyst portion 21 is about 600°C to 700°C in the heat insulation state. Therefore, for example, when the gas G1 containing the ammonia (not containing the hydrogen) and having the temperature of about 30°C (room temperature) is introduced, the gas G1 passes through the first catalyst portion 13 without being ignited, and flows into the second catalyst portion 21 as the gas G2. The gas G (the gas G1) flowing into the second catalyst portion 21 is reacted due to the second catalyst portion 21 heated to about 600°C to 700°C.

For example, when the gas G2 at about 30°C flows into the second catalyst portion 21, the temperature may decrease in the vicinity of the inlet of the second catalyst portion 21. However, the reactions proceeding in the vicinity of the inlet of the second catalyst portion 21 (the reactions represented by the reaction equations (12) and (13)) are exothermic reactions. Therefore, due to the exothermic reactions occurring in the second catalyst portion 21, the temperature of the second catalyst portion 21 hardly decreases even when the gas G2 having the relatively low temperature flows in. Therefore, the temperature of the second catalyst portion 21 is maintained high in the heat insulation state, and the decomposition reaction of the ammonia continues as shown in FIG. 11 even without the addition of the combustible gas.

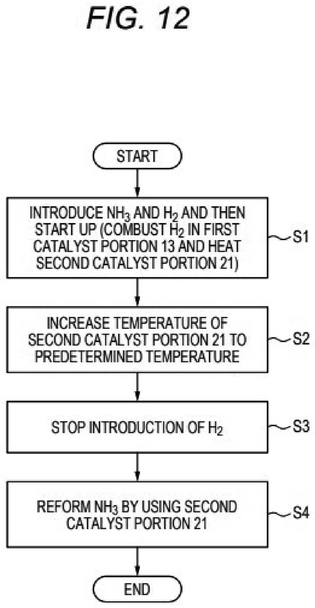

FIG. 12 is a flowchart showing a hydrogen production method (hereinafter referred to as the production method according to the present disclosure). The production method shown in FIG. 12 can be performed by using, for example, the reactor 10 (FIGS. 5A to 5D). Therefore, FIG. 12 will be appropriately described with reference to FIGS. 5A to 5D. In FIG. 12, for convenience, the hydrogen is exemplified as the combustible gas.

The production method according to the present disclosure is also a method for reforming the ammonia, and includes steps to S4. As shown in FIG. 12, the step S1 (an introduction step) is a step of introducing the gas G1 (the introduction gas) containing the ammonia and the combustible gas other than the ammonia into the reactor 10A. Accordingly, the hydrogen is combusted in the first catalyst portion 13, and the second catalyst portion 21 is heated. Although the amount of the combustible gas added to the ammonia is not particularly limited, the amount of the combustible gas (the hydrogen or the like) is, for example, 0.02 mol or more and 0.06 mol or less, preferably 0.03 mol or more and 0.05 mol or less with respect to 1 mol of the ammonia.

The step S2 (a heating step, a combustion step) is a step of selectively combusting the combustible gas in the introduced gas G1 with the first catalyst. The combustion can be performed by, for example, igniting the gas G1 in the first catalyst portion 13. Further, the selective combustion of the combustible gas can be performed by, for example, setting the temperature of the gas G1 to be equal to or higher than an ignition temperature of the combustible gas and lower than an ignition temperature of the ammonia.

Further, the step S2 (the heating step, the combustion step) is a step of heating the second catalyst portion 21 (an example of the second catalyst) by, for example, the heat generated by combusting the combustible gas in the first catalyst portion 13. As described above, the second catalyst portion 21 is a catalyst portion that generates the hydrogen from the ammonia. By heating the second catalyst portion 21, the temperature of the second catalyst portion 21 increases to a predetermined temperature. Although the predetermined temperature is not particularly limited, the predetermined temperature is preferably, for example, a temperature at which the reactions represented by the reaction equations (12) to (14) can proceed. Further, the temperature can increase to the predetermined temperature by appropriately adjusting the concentration of the combustible gas in the gas G1.

The step S3 (a reforming step) is a step of stopping the introduction of the combustible gas (the hydrogen) after the temperature of the second catalyst portion 21 (the example of the second catalyst) reaches the predetermined temperature. Since the combustible gas (the hydrogen) is not supplied to the first catalyst portion 13 by stopping the introduction, the combustion of the combustible gas (the hydrogen) in the first catalyst portion 13 stops.

The step S4 (the reforming step) is a step of generating the hydrogen from the ammonia by using the second catalyst portion 21. The introduction of the combustible gas (the hydrogen) can be stopped while continuing the introduction of the gas G1 containing the ammonia. However, the introduction of the combustible gas may be stopped by stopping the introduction of the gas G1 containing the ammonia and the combustible gas (the hydrogen) and then introducing the gas G1 containing the ammonia and not containing the combustible gas (the hydrogen).

By stopping the introduction of the combustible gas, the gas G1 containing the ammonia and the oxygen does not react in the first catalyst portion 13, and is supplied to the second catalyst portion 21 as the gas G2. Immediately after the stop of the introduction of the combustible gas, the gas G2 contains a product produced by the combustion of the combustible gas in the first catalyst portion 13. The product is, for example, water when the combustible gas is the hydrogen.

A reaction pressure in the second catalyst portion 21 (in particular, a pressure at which the reactions represented by the reaction equations (2) and (3) proceed) is, for example, 0.02 MPaG or more and 0.6 MPaG or less, preferably 0.05 MPaG or more and 0.3 MPaG or less. Further, the reaction temperature is, for example, 180°C or higher and 800°C or lower, preferably 200°C or higher to 650°C or lower. In the gas G2 supplied to the second catalyst portion 21, the content of the oxygen is, for example, 0.1 mol or more and 0.2 mol or less, preferably 0.12 mol or more and 0.16 mol or less per mol of the ammonia. The oxygen is also consumed in the first catalyst portion 13 provided upstream of the second catalyst portion 21. Therefore, it is preferable to determine the amount of the oxygen in the gas G1 introduced into the reactor 10 in consideration of the amount of the oxygen consumed in both the first catalyst portion 13 and the second catalyst portion 21.

The above points are summarized as follows.

In the present disclosure, the combustible gas (the hydrogen) is combusted in the first catalyst portion 13. Accordingly, the temperature of the second catalyst portion 21 increases to a temperature at which the oxidation reaction of the ammonia can be started. Then, the hydrogen is produced by oxidative decomposition of the ammonia in the second catalyst portion 21.

In a boiler or a heating furnace in which the startup and stop thereof are frequently performed, it is necessary to heat a reaction gas to 200°C or higher in advance each time the boiler or the heating furnace is started up. In the related art, a heater (for example, an electric heater or a burner) is required for the heating, and it takes time to raise the temperature. Therefore, in the present disclosure, when the combustible gas such as hydrogen and the oxygen are added to the gas G1 (the reaction gas), a combustion reaction proceeds in the first catalyst portion 13 from room temperature (for example, 30°C). By the heat generation, the temperature of the gas G1 is increased in the reactor 10 to the temperature at which the oxidation reaction of the ammonia in the second catalyst portion 21 on the downstream side starts. Accordingly, the heating furnace is unnecessary, and the response to the increase in temperature is accelerated. This is because the reaction gas can be directly heated instead of indirect heating from the outside.

In addition, in the present disclosure, since the second catalyst portion 21 is a honeycomb catalyst having a honeycomb shape, the heat insulating properties of the second catalyst portion 21 and the housing 1 can be improved, and the heat generation due to the combustion of the combustible gas in the first catalyst portion 13 and the dissipation of the heat generated by the ammonia oxidation in the second catalyst portion 21 can be restrained.

In a "small-to-medium-scale reactor having a hydrogen production amount of 10 Nm$^3$/hr to 2,000 Nm$^3$/hr", which is a main object of the present disclosure, the ratio of an outer surface area of the reactor per unit catalyst volume is large. Therefore, the heat is easily dissipated, the temperature of the gas G decreases, and as a result, the decomposition rate of the ammonia decreases. On the other hand, when the heat insulating material 12 is made thick, an outer diameter of the reactor 10 becomes large, so that compactness in size of a small-scale device is impaired. Alternatively, a large amount of oxygen needs to be supplied in order to maintain the temperature corresponding to the amount of heat dissipation, and the yield of the hydrogen deteriorates. Therefore, in the present disclosure, the honeycomb catalyst is used. In the honeycomb catalyst, no reaction occurs on an outer surface having a honeycomb shape, and thus no heat is generated on the surface in contact with an inner surface of the reactor 10 (a surface of the heat insulating material 12), and since an outer wall having a honeycomb shape is made of ceramic, the heat insulating property of the catalyst itself is excellent. Accordingly, it is possible to achieve both compactness in size and an increase in the yield of hydrogen.

In addition, in the present disclosure, the first catalyst portion 13 and the second catalyst portion 21 are respectively disposed in the portions having the same cross-sectional area (the locally widening portions inside the housing 1). Accordingly, the heat dissipation can be restrained. In addition, although the details will be described later with reference to the second embodiment, the first catalyst portion 13 is disposed between the introduction port 2 and the upper end of the locally widening portion formed below the introduction port 2. Accordingly.

The thickness T1 of the heat insulating material 12 covering the first catalyst portion 13 can be increased, and the heat dissipation at the first catalyst portion 13 can be significantly restrained.

Further, in the present disclosure, the sizes of the first catalyst portion 13 and the second catalyst portion 21 are set as described above. The production of the hydrogen from the ammonia for achieving carbon neutral requires high thermal efficiency in a production process thereof. Therefore, requirements for the reactor 10A include a high heat insulating property, a low pressure loss, and a high one-pass conversion rate. In order to reduce the pressure loss and improve the heat insulating property, H1/(W1 × D1) and H2/(W2 × D2) should be reduced. However, when these values are too small, the flow velocity of the gas G decreases, the gas G is less likely to diffuse into the first catalyst portion 13 and the second catalyst portion 21, and the conversion rate of the ammonia decreases. In addition, as a result of deterioration of the dispersion uniformity of the gas G, a drift occurs, and the decomposition rate of the ammonia decreases. Therefore, in the present disclosure, the sizes of the first catalyst portion 13 and the second catalyst portion 21 are optimized and set as described above, thereby improving decomposition efficiency of the ammonia.

According to the present embodiment, it is possible to provide a reactor that has high thermal efficiency and is capable of quickly coping with a load variation on the demand portion X side and startup and shutdown, and a hydrogen production method, and the acquired hydrogen is sent to and used in, for example, a boiler, an industrial furnace, or the like.

[Sixth Embodiment]

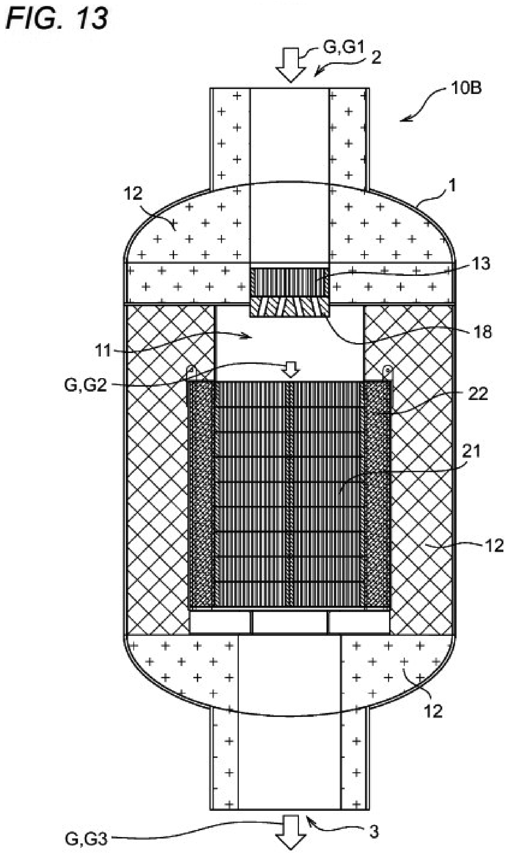

FIG. 13 is a cross-sectional view showing an internal structure of a reactor 10B according to a sixth embodiment.

The same component members as those of the fifth embodiment are denoted by the same reference numerals, and the description thereof will be omitted.

The sixth embodiment is different from the first embodiment in that the first catalyst portion 13 is provided in the vicinity of the introduction port 2. Therefore, the first catalyst portion 13 is disposed in a portion having a cross-sectional area smaller than the cross-sectional area in the horizontal direction of the portion in which the second catalyst portion 21 is provided. In addition, the shape between the introduction port 2 and the upper end of the locally widening portion formed below the introduction port 2 is a rectangular cylindrical shape (a rectangular shape in a top view). However, the introduction port 2 may have a cylindrical shape (a circular shape in a top view).

A dispersion portion 18 is provided below the first catalyst portion 13, and a lower surface of the dispersion portion 18 is disposed in the locally widening portion. The thickness T1 of the heat insulating material 12 surrounding the first catalyst portion 13 according to the second embodiment is larger than the thickness T1 of the heat insulating material 12 surrounding the first catalyst portion 13 according to the first embodiment. Further, the second embodiment is different from the first embodiment in that the first catalyst portion 13 has a honeycomb shape. Therefore, similarly to the second catalyst portion 21, the first catalyst portion 13 is a honeycomb catalyst. A specific structure of the first catalyst portion 13 will be described later with reference to the third embodiment.

Also in the sixth embodiment, the experiment of FIG. 10 was performed to verify effects thereof. Experiment conditions are described, and the first catalyst portion 13 was a honeycomb catalyst supporting platinum. The size of the honeycomb catalyst was set as the width W1 = 150 mm, the depth D1 = 150 mm, and the height H1 = 50 mm. The filling amount of the first catalyst was 2.25 L. Experiment conditions other than the above were the same as those of FIG. 10. The cross-sectional area of the first catalyst portion 13 was set as 150 mm × 150 mm, W2/W1 = 2, and T1/T2 = 1.4.

Even when the verification was performed under such experiment conditions, the same effects (the temperature distribution shown in FIG. 10) as those of the fifth embodiment were acquired.

[Seventh Embodiment]

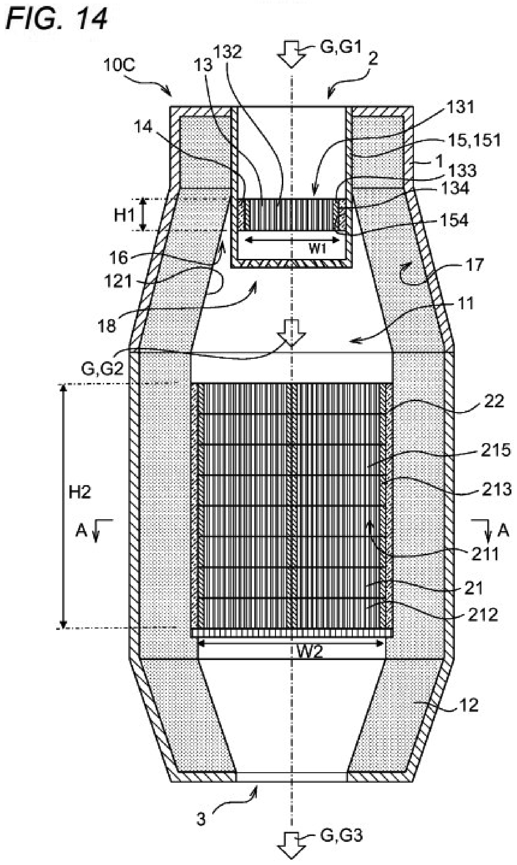

FIG. 14 is a cross-sectional view showing an internal structure of a reactor 10C according to a seventh embodiment.

The same component members as those of the fifth embodiment and the sixth embodiment are denoted by the same reference numerals, and the description thereof will be omitted.

In the seventh embodiment, the housing 1 includes, between the introduction port 2 and the second catalyst portion 21, an enlarged portion 17 in which the cross-sectional area of the channel 11 formed inside the housing 1 increases toward the downstream side of the gas flow. The heat insulating material 12 is disposed along an inner surface of the housing 1, and the thickness of the heat insulating material 12 is the same regardless of the disposition location. Therefore, the cross-sectional area of the channel 11 partitioned by the heat insulating material 12 is increased at the enlarged portion 17 of the housing 1.

The first catalyst portion 13 is disposed in the enlarged portion 17. Due to the disposition at this position, the heated gas G2 generated in the first catalyst portion 13 flows downward along the heat insulating material 12 and spreads. Accordingly, it is possible to restrain the heated gas G2 from being blown out to the heat insulating material 12, and to restrain the heat dissipation to the outside of the reactor 10 through the heat insulating material 12.

In the example of the present disclosure, the first catalyst portion 13 is provided inside the enlarged portion 17. Since both the first catalyst portion 13 and a cylinder body 15 have a rectangular shape, the size of a gap 16 increases toward the downstream side of the gas flow on the side of the first catalyst portion 13. In the first catalyst portion 13, since the temperature is increased by the heat generated in first channels 131 toward the downstream side of the gas flow, a heat insulating effect achieved by the presence of a gas phase can be improved by increasing the gap 16 toward the downstream side.

By providing the first catalyst portion 13 in, for example, the vicinity of the introduction port 2 inside the reactor 10, it is possible to restrain the heat generated by the combustion of the combustible gas from being unintentionally dissipated to the outside, and to increase the temperature of the gas G2 supplied to the second catalyst portion 21 to a temperature (for example, 200°C or higher) effective for the ammonia reforming. Accordingly, damage to the reactor 10 (particularly, the housing 1) due to the heat can be restrained. Further, since the ammonia reforming is performed, the reactor 10 can be quickly started up (prepared before the ammonia reforming).

The first catalyst portion 13 is disposed with the gap 16 between the first catalyst portion 13 and a surface 121 of the heat insulating material 12. The surface 121 is a surface facing the channel 11 (a surface partitioning the channel 11), and is a surface with which the gas G flowing inside the reactor 10 comes into contact. Therefore, since the gas G is present in the gap 16, the gas phase is present between the heat insulating material 12 and the first catalyst portion 13. Therefore, the heat generated in the first catalyst portion 13 is less likely to be conducted to the heat insulating material 12. Although the heat insulating material 12 has the heat insulating effect, the heat conduction (the heat dissipation to the outside) to some extent can occur. Therefore, by using the gap 16 to avoid thermal contact (including contact via the solid cylinder body 15) between the first catalyst portion 13 and the heat insulating material 12, it is possible to restrain the heat dissipation to the outside of the reactor 10, and to effectively use the heat. In addition, it is possible to restrain the damage to the housing 1 due to the heat.

Although the first catalyst portion 13 is, for example, the honeycomb catalyst having the honeycomb shape, and includes, for example, the first channels 131 each having a rectangular shape in a top view (not shown), the first catalyst portion 13 may include, for example, the first channels 131 each having a circular shape, a honeycomb shape, or a hexagonal shape. The first catalyst portion 13 has a rectangular shape (a cubic shape, a rectangular parallelepiped shape, or the like) having a thickness. The first catalyst portion 13 includes the first channels 131 and a first holder 132. Each first channel 131 is a channel along the gas flow (the gas flow in the channel 11) formed between the introduction port 2 and the outlet port 3. The channels of the second catalyst portion 21 according to the first embodiment and the first catalyst portion 13 and the second catalyst portion 21 according to the second embodiment may also have, for example, a circular shape, a honeycomb shape, or a hexagonal shape.

The first holder 132 is a holder that partitions the first channels 131 and holds the first catalyst. Since the first catalyst portion 13 includes the first channels 131 and the first holder 132, the catalyst reaction can proceed with respect to the gas G flowing through the first channels 131 without significantly increasing the pressure loss of the gas G flowing through the channel 11. More specifically, by restraining the pressure loss in the first catalyst portion 13 (the pressure loss is proportional to the square of a linear velocity) while increasing the GHSV of the gas G flowing through the first catalyst portion 13 as much as possible, the amount of the first catalyst used can be reduced, and the reactor 10 can be made compact.

A method of supporting the first catalyst on the first holder 132 is not particularly limited. In the example of the present disclosure, for example, a raw material containing a binder (for example, clay powder) can be extruded into the shape of the first catalyst portion 13, and can support a catalyst component after being baked. For example, in the first catalyst portion 13 produced in this manner, the gas G1 flowing through the first channels 131 diffuses inside the first holder 132, and the catalyst reaction proceeds in the vicinity of the first channels 131 inside the first holder 132. However, the first catalyst may be supported on, for example, a surface of the first holder 132 so as to face the first channels 131.

The cell number (number) of the first channels 131 is not particularly limited, and for example, the cell number of the first channels 131 is 200 or more and 2,000 or less, preferably 400 or more and 1,200 or less per 645.16 mm$^2$ (1 inch$^2$) in a top view of the first catalyst portion 13 (a state in which the first catalyst portion 13 is viewed from the introduction port 2). The first channels 131 have the same cross-sectional area in an entire region of the first catalyst portion 13 in a thickness direction, and extend linearly in a vertical direction. Further, the first channels 131 are regularly arranged at equal intervals.

The first channels 131 are formed in the first holder 132. In the first catalyst portion 13, a thickness of a square wall (a thickness of a peripheral wall) surrounding the first channels 131, that is, a thickness of a first end portion 133 (an end portion formed on the side of the first channels 131) of the first holder 132 is thicker than the interval between the adjacent first channels 131. The combustible gas such as hydrogen flows through the first channels 131, and the combustion of the combustible gas proceeds in the first channels 131. Therefore, the first channels 131 have a high temperature (for example, 150°C or higher and 250°C or lower, for example, about 200°C), and the heat generated in the first catalyst portion 13 is supplied to the second catalyst portion 21 on the downstream side. Therefore, even when the heat dissipation to the housing 1 to some extent is unavoidable, it is preferable to restrain the amount (the amount of heat dissipation) of the heat unintentionally dissipated from the first catalyst portion 13 to the outside of the reactor 10.

The side of the first catalyst portion 13 is surrounded by, for example, the heat insulating material 14 having flexibility (elasticity). Accordingly, the inflow and outflow of the gas G can be promoted, and the heat dissipation to the side can be restrained. In particular, since the housing 1 is present on the side of the first catalyst portion 13, the heat dissipation to the housing 1 can be restrained by the heat insulating material 14. The heat insulating material 14 is made of, for example, a material having heat resistance and a string shape or a fiber shape, and is specifically, for example, rock wool, but is not limited thereto.

The first catalyst portion 13 is accommodated in, for example, the cylinder body 15 having a bottomed cylindrical shape. The dispersion portion 18 is provided on a bottom surface of the cylinder body 15. As described above, the introduction port 2 is formed in the housing 1, and the cylinder body 15 is accommodated to be fitted into the introduction port 2. Therefore, the gas G1 introduced through the introduction port 2 flows into the cylinder body 15 and then flows inside the cylinder body 15 also serving as the channel 11.

The cylinder body 15 includes a main body 151 that accommodates the first catalyst portion 13. An outer shape (for example, a rectangular cylindrical shape, a cylindrical shape, or the like) of the main body 151 matches the shape (for example, a rectangular shape, a circular shape, or the like) of the introduction port 2.

The heat insulating material 14 is provided between an inner wall surface 154 of the cylinder body 15 and a side surface 134 of the first catalyst portion 13. The heat insulating material 14 is disposed to densely fill a space between the inner wall surface 154 and the side surface 134 as much as possible. In addition, since the heat insulating material 14 is provided between the inner wall surface 154 and the side surface 134, the gas G1 introduced from the introduction port 2 flows into the first channels 131 without passing between the inner wall surface 154 and the side surface 134.

In this way, the heat insulating effect is achieved by disposing the heat insulating material 14 between the inner wall surface 154 and the side surface 134. In addition, in the heat insulating material 14, the first end portion 133 is disposed to surround the first channels 131, and no heat is generated in the first end portion 133 into which the gas G1 does not flow, and outside the first end portion 133. Further, the heat generated in the first channels 131 is less likely to be conducted to the outside due to the first end portion 133. Therefore, it is possible to restrain the heat from being unintentionally dissipated to the outside of the reactor 10, and to improve utilization efficiency of the heat. In addition, it is possible to restrain the damage to the housing 1 due to the heat.

The second catalyst portion 21 is constituted by arranging a plurality of (for example, four) second catalyst unit portions 215 in a square shape in the horizontal direction and stacking a plurality of stages (for example, eight stages) of the second catalyst unit portions 215 in a height direction. As described above, by constituting the second catalyst portion 21 using the combination of the plurality of second catalyst unit portions 215, the shape of the second catalyst portion 21 can be flexibly changed according to design conditions such as the shape and size of the second catalyst portion 21, a disposition location, and the like. However, the second catalyst portion 21 is not necessarily constituted by the plurality of second catalyst unit portions 215, and may be constituted in a single shape. In addition, the shape of the second catalyst portion 21 is not limited to a square shape (a prism shape), and may be, for example, a round shape (a columnar shape).

The second catalyst unit portion 215 is the same as the first catalyst portion 13 except that the supported catalyst is different. Therefore, the description (the production method, the dimension, the shape, and the like) of the first catalyst portion 13 can also be similarly applied to the second catalyst unit portion 215.

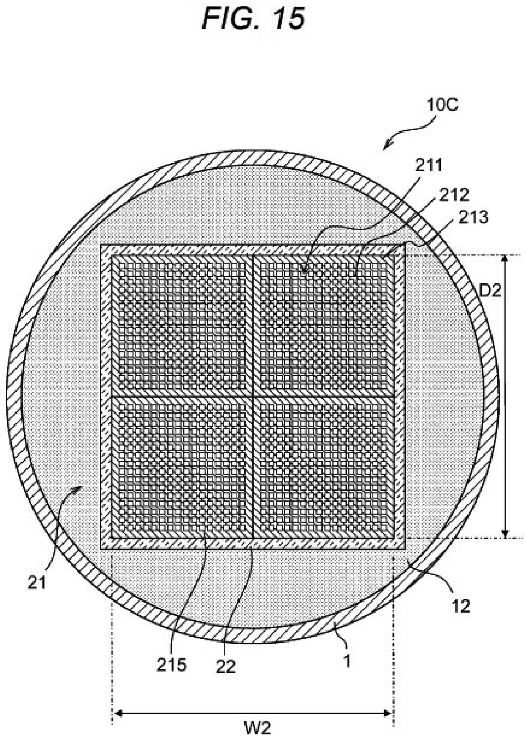

FIG. 15 is a cross-sectional view taken along a line A-A in FIG. 140, and is a cross-sectional view of the second catalyst portion 21 provided in the second stage. For example, the second catalyst portion 21 having the square shape is disposed at the center of the housing 1 in a top view inside the housing 1 having the cylindrical shape. The housing 1 may have, for example, a square shape (a tubular shape having corners). The heat insulating material 22 is wound around the second catalyst portion 21 in the same manner as the first catalyst portion 13. The heat insulating material 22 is the same as the heat insulating material 14 except that a wound object is different. Similarly to the first catalyst portion 13, the heat insulating material 12 is disposed outside the heat insulating material 22.

Returning to FIG. 14, the second catalyst portion 21 is a honeycomb catalyst having a honeycomb shape, similarly to the first catalyst portion 13. Although the honeycomb shape includes the second channels 211 each having a rectangular shape in a top view in the illustrated example, the honeycomb shape may include the second channels 211 each having, for example, a circular shape, a honeycomb shape, or a hexagonal shape. The second catalyst portion 21 includes the second channels 211 and a second holder 212. The second channels 211 (the second channels) are channels along the gas flow (the gas flow in the channel 11) formed between the introduction port 2 and the outlet port 3. In the example of the present disclosure, the second channels 211 have the same cross-sectional area in an entire region of the second catalyst portion 21 in the thickness direction, and extend linearly in the vertical direction. Further, the second channels 211 are regularly arranged at equal intervals.

The second holder 212 is a holder that partitions the second channels 211 and holds the second catalyst. Since the second catalyst portion 21 has such a structure, the catalyst reaction can proceed with the gas G flowing through the second channels 211 without significantly increasing the pressure loss of the gas G flowing through the channel 11. Accordingly, by restraining the pressure loss in the second catalyst portion 21 (the pressure loss is proportional to the square of the linear velocity) while increasing the GHSV of the gas G flowing through the second catalyst portion 21 as much as possible, the amount of the catalyst used can be reduced, and the reactor 10 can be made compact.

The second channels 211 are formed in the second holder 212. A thickness of the end portion 213 of the second holder 212 (a side end portion of the second channel 211) is thicker than the interval between the adjacent second channels 211 so as to surround the second channels 211. In the second channels 211, the exothermic reactions to be described later proceed. Therefore, the second channels 211 have a high temperature (for example, 600°C or higher and 800°C or lower), and the heat generated in the first catalyst portion 13 is supplied to the second catalyst portion 21 on the downstream side. Therefore, even when the heat dissipation to the housing 1 to some extent is unavoidable, it is preferable to restrain the amount (the amount of heat dissipation) of the heat unintentionally dissipated from the first catalyst portion 13 to the outside of the reactor 10. Therefore, similarly to the first catalyst portion 13, the heat dissipation to the outside can be restrained by providing the end portion 213.

Also in the seventh embodiment, the same experiment as that of FIG. 10 was performed to verify the effects thereof. The experiment conditions were the same as those of the second embodiment except that T1/T2 = 1 was set. Even when the verification was performed under such experiment conditions, the same effects (the temperature distribution shown in FIG. 10) as those of the fifth embodiment were acquired.

INDUSTRIAL APPLICABILITY

The present invention is applicable to an ammonia-hydrogen mixed fuel production apparatus in general.

REFERENCE SIGNS LIST

    1010A to 1010D ammonia-hydrogen mixed fuel production apparatus
    1011 air
    1013 oxygen separator
    1014 raw material supply portion
    1015 reforming reactor
    1016 reformed gas
    1017 gas component analyzer
    1018 fuel
    1 housing
    10A, 10B, 10C reactor
    11 channel
    12 heat insulating material
    121 surface
    13 first catalyst portion
    131 first channel
    132 first holder
    133 first end portion
    134 side surface
    14 heat insulating material
    15 cylinder body
    151 main body
    154 inner wall surface
    16 gap
    17 enlarged portion
    18A first dispersion portion
    18B second dispersion portion
    2 introduction port
    21 second catalyst portion
    211 second channel
    212 second holder
    213 end portion
    215 second catalyst unit portion
    22 heat insulating material
    3 outlet port
    51 heat exchanger
    52 tank
    53 pump
    54 outflow channel
    54a branch portion
    54b return channel
    step (introduction step)
    S2 step (heating step)

S3 step (reforming step)
S4 step (reforming step)

**Claims**

1. An ammonia-hydrogen mixed fuel production apparatus, comprising:

   an oxygen supply portion configured to supply oxygen of a desired concentration;
   a reforming reactor configured to convert ammonia into hydrogen by using the oxygen of the desired concentration supplied from the oxygen supply portion, and to use an acquired mixture as a reformed gas; and
   a gas component analyzer configured to measure a concentration of one or both of the hydrogen and the ammonia in the reformed gas from the reforming reactor.

2. The ammonia-hydrogen mixed fuel production apparatus according to claim 1, wherein
   the oxygen supply portion is an oxygen separator that separates oxygen from air at a desired concentration.

3. The ammonia-hydrogen mixed fuel production apparatus according to claim 1, wherein
   the oxygen supply portion is an air dryer that removes moisture in supplied air.

4. The ammonia-hydrogen mixed fuel production apparatus according to claim 1, wherein
   the oxygen supply portion adds 3 vol% to 20 vol% of oxygen with respect to a supply amount of the ammonia.

5. The ammonia-hydrogen mixed fuel production apparatus according to claim 1 or 2, wherein
   a supply amount of the oxygen from the oxygen supply portion is controlled based on the concentration of one or both of the hydrogen and the ammonia from the gas component analyzer.

6. The ammonia-hydrogen mixed fuel production apparatus according to claim 1 or 2, wherein
   a bypass line for supplying the ammonia from the raw material supply portion is provided between the reforming reactor and a measurement point of the gas component analyzer on a downstream side of the reforming reactor.

7. The ammonia-hydrogen mixed fuel production apparatus according to claim 1 or 2, further comprising:

   a bypass line configured to supply the ammonia from a raw material supply portion between the reforming reactor and a measurement point of the gas component analyzer on a downstream side of the reforming reactor; and
   a storage tank provided between an ammonia introduction position of the bypass line and the reforming reactor, in which
   a gas composition of the reformed gas and the ammonia is adjusted according to a composition ratio of the ammonia and the hydrogen in the gas component analyzer and a required fuel composition ratio.

8. The ammonia-hydrogen mixed fuel production apparatus according to claim 1, wherein
   the reforming reactor includes:

   a housing that includes an introduction port through which the ammonia and a combustible gas other than the ammonia are introduced, and an outlet port through which a produced gas flows out,
   a first catalyst portion disposed inside the housing and including a first catalyst that generates heat by combusting the combustible gas introduced from the introduction port, and
   a second catalyst portion disposed between the first catalyst portion and the outlet port and including a second catalyst that is heated by the heat generated in the first catalyst portion and generates hydrogen from ammonia.

9. The ammonia-hydrogen mixed fuel production apparatus according to claim 8, wherein
   the first catalyst portion is disposed between the introduction port and the second catalyst portion.

10. The ammonia-hydrogen mixed fuel production apparatus according to claim 8, wherein
    the reactor includes, between the first catalyst portion and the second catalyst portion, a dispersion portion that disperses a gas flowing out from the first catalyst portion toward the second catalyst portion.

11. The ammonia-hydrogen mixed fuel production apparatus according to claim 8, further comprising:

an outflow channel through which the hydrogen flows out from the outlet port;

a tank provided in the outflow channel and configured to store the hydrogen flowing out; and

a return channel branched from a branch portion of the outflow channel and configured to return the hydrogen to the introduction port.

12. A fuel supply system using an ammonia-hydrogen mixed fuel production apparatus according to claim 1 or 2 to supply an ammonia-reformed fuel to a fuel demand portion side.

13. A hydrogen production method, comprising:

an introduction step of introducing an introduction gas containing ammonia and a combustible gas other than the ammonia into a reactor;

a combustion step of selectively combusting the combustible gas in the introduced introduction gas with a first catalyst;

a second catalyst heating step of heating a second catalyst, which generates hydrogen from the ammonia, by heat generated in the combustion step; and

a reforming step of stopping the introduction of the combustible gas after a temperature of the second catalyst reaches a predetermined temperature, and generating the hydrogen from the ammonia by using the second catalyst.

## FIG. 1

## FIG. 2

## FIG. 3

## FIG. 4

## FIG. 5A

FIG. 5B

18A-1

18b          18a

FIG. 5C

18A-2

18a          18b-1          18b-2

FIG. 5D

## FIG. 6

## FIG. 7

EP 4 741 337 A1

FIG. 8

28

# FIG. 9

*FIG. 10*

*FIG. 11*

# FIG. 12

```
                    ┌─────────────┐
                    │    START    │
                    └─────────────┘
                           │
                           ▼
        ┌─────────────────────────────────────┐
        │ INTRODUCE NH₃ AND H₂ AND THEN        │
        │ START UP (COMBUST H₂ IN FIRST        │ ⌐ S1
        │ CATALYST PORTION 13 AND HEAT         │
        │ SECOND CATALYST PORTION 21)          │
        └─────────────────────────────────────┘
                           │
                           ▼
        ┌─────────────────────────────────────┐
        │ INCREASE TEMPERATURE OF              │
        │ SECOND CATALYST PORTION 21 TO        │ ⌐ S2
        │ PREDETERMINED TEMPERATURE            │
        └─────────────────────────────────────┘
                           │
                           ▼
        ┌─────────────────────────────────────┐
        │ STOP INTRODUCTION OF H₂              │ ⌐ S3
        └─────────────────────────────────────┘
                           │
                           ▼
        ┌─────────────────────────────────────┐
        │ REFORM NH₃ BY USING SECOND           │ ⌐ S4
        │ CATALYST PORTION 21                  │
        └─────────────────────────────────────┘
                           │
                           ▼
                    ┌─────────────┐
                    │     END     │
                    └─────────────┘
```

INTRODUCE $NH_3$ AND $H_2$ AND THEN START UP (COMBUST $H_2$ IN FIRST CATALYST PORTION 13 AND HEAT SECOND CATALYST PORTION 21) — S1

INCREASE TEMPERATURE OF SECOND CATALYST PORTION 21 TO PREDETERMINED TEMPERATURE — S2

STOP INTRODUCTION OF $H_2$ — S3

REFORM $NH_3$ BY USING SECOND CATALYST PORTION 21 — S4

FIG. 13

FIG. 14

# FIG. 15

## INTERNATIONAL SEARCH REPORT

International application No.

**PCT/JP2024/025912**

### A. CLASSIFICATION OF SUBJECT MATTER

*C01B 3/04*(2006.01)i; *B01J 23/42*(2006.01)i; *C01B 3/06*(2006.01)i
FI: C01B3/04 B; B01J23/42 M; C01B3/06

According to International Patent Classification (IPC) or to both national classification and IPC

### B. FIELDS SEARCHED

Minimum documentation searched (classification system followed by classification symbols)

C01B3/04; B01J23/42; C01B3/06

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2021-017388 A (KABUSHIKI KAISHA TOYOTA JIDOSHOKKI) 15 February 2021 (2021-02-15)<br>    claim 1, paragraphs [0018]-[0051], fig. 1-3 | 1-13 |
| A | WO 2020/004146 A1 (KABUSHIKI KAISHA TOYOTA JIDOSHOKKI) 02 January 2020 (2020-01-02)<br>    entire text, all drawings | 1-13 |
| A | JP 2021-038121 A (KABUSHIKI KAISHA TOYOTA JIDOSHOKKI) 11 March 2021 (2021-03-11)<br>    entire text, all drawings | 1-13 |
| A | JP 2020-180021 A (KABUSHIKI KAISHA TOYOTA JIDOSHOKKI) 05 November 2020 (2020-11-05)<br>    entire text, all drawings | 1-13 |
| A | JP 2006-224076 A (FUKUHARA CO., LTD.) 31 August 2006 (2006-08-31)<br>    entire text, all drawings | 1-13 |

| ✓ | Further documents are listed in the continuation of Box C. | ✓ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 August 2024** | **10 September 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

| International application No. |
| --- |
| **PCT/JP2024/025912** |

**C.    DOCUMENTS CONSIDERED TO BE RELEVANT**

| Category* | Citation of document, with indication, where appropriate, of the relevant passages | Relevant to claim No. |
| --- | --- | --- |
| A | JP 8-059207 A (TOKICO LTD.) 05 March 1996 (1996-03-05)<br>entire text, all drawings | 1-13 |

Form PCT/ISA/210 (second sheet) (July 2022)

**INTERNATIONAL SEARCH REPORT**
Information on patent family members

International application No.

**PCT/JP2024/025912**

| Patent document cited in search report | | | Publication date (day/month/year) | Patent family member(s) | Publication date (day/month/year) |
|---|---|---|---|---|---|
| JP | 2021-017388 | A | 15 February 2021 | (Family: none) | |
| WO | 2020/004146 | A1 | 02 January 2020 | (Family: none) | |
| JP | 2021-038121 | A | 11 March 2021 | (Family: none) | |
| JP | 2020-180021 | A | 05 November 2020 | (Family: none) | |
| JP | 2006-224076 | A | 31 August 2006 | (Family: none) | |
| JP | 8-059207 | A | 05 March 1996 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022144912 A

- JP 2023083706 A